(19) **Europäisches Patentamt**
**European Patent Office**
**Office européen des brevets**

(11) **EP 1 855 281 B1**

(12) **EUROPEAN PATENT SPECIFICATION**

(45) Date of publication and mention
of the grant of the patent:
**12.06.2019 Bulletin 2019/24**

(51) Int Cl.:
*G11B 20/00* (2006.01) *G11B 20/18* (2006.01)
*G06F 21/64* (2013.01) *G06F 21/80* (2013.01)
*G06F 11/10* (2006.01)

(21) Application number: **07007647.6**

(22) Date of filing: **13.04.2007**

(54) **Apparatus for writing data to a medium**

Vorrichtung zum Schreiben von Daten auf ein Medium

Appareil pour l'écriture de données sur un support

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **10.05.2006 US 746964 P
16.05.2006 US 747363 P**

(43) Date of publication of application:
**14.11.2007 Bulletin 2007/46**

(73) Proprietor: **NERO AG
76137 Karlsruhe (DE)**

(72) Inventors:
 • **Lesser, Richard
   76227 Karlsruhe (DE)**
 • **Eckleder, Andreas
   76316 Malsch (DE)**

 • **Kopf, Reiner
   75334 Straubenhardt (DE)**

(74) Representative: **Zinkler, Franz et al
   Schoppe, Zimmermann, Stöckeler
   Zinkler, Schenk & Partner mbB
   Patentanwälte
   Radlkoferstrasse 2
   81373 München (DE)**

(56) References cited:
 **EP-A- 1 164 588    EP-A- 1 580 746
 EP-A- 1 587 095    EP-A- 1 622 145
 EP-A1- 0 802 527    EP-A2- 0 785 547
 WO-A-99/55055    AU-B2- 764 069
 US-A- 5 940 505**

## Description

EP 1164588 A2 describes a method and an apparatus for information outputting. An information outputting apparatus, as for example a set top box, for outputting recording information to be recorded in a recording medium by an information recording apparatus to the information recording apparatus is provided. The information recording apparatus could, for example, be an external recorder. In case that the recording information received in the information outputting apparatus, such as a set top box, is transmitted to a recorder and further it is recorded in the recording medium such as a DVD-R after the recording medium is loaded in the recorder and before the recording information is recorded in the recording medium, an obtaining device such as a CPU obtains an identification information from the recording medium. An encrypting device encrypts the recorded information by using the obtained identification information and an outputting device such as an interface unit outputs the encrypted recording information to the recorder. The recording medium has the identification information recorded in advance to be individually identified.

EP 0802527 A1 provides a concept for simplifying the operating and other procedures of an optical disc application system. Optical discs have auxiliary data recording areas, where different identifications for individual discs and/or cipher keys and/or decoding keys for ciphers are recorded in advance in a factory. By using the identification to release the soft ciphers, using the cipher keys when sending the ciphers, and using the decoding keys when receiving the ciphers, user authorization procedures can be simplified.

AU 199960936 B2 provides a method for copying digital data, which shall prevent bit-by-bit duplication of digital data. A reading device for implementing the method is provided. The method is characterized in that the medium whereon the digital data are to be duplicated comprises a serial number used for formatting the read digital data before writing to the medium. Therewith individually formatted data based on the serial number is achieved, and copy protection is carried out. The serial numbers are recorded in an unfalsifiable manner during the manufacturing process of, for example, an optical disc.

WO99/55055 provides a network arrangement for preventing unauthorized copying of data. The network comprises a client device which communicates a unique identifier associated with a particular piece of media to which an electronic data is to be stored to a server. The server encrypts the electronic data using the unique identifier as a key and downloads the encrypted electronic data to the client computer, where the client computer writes the encrypted electronic data to the particular piece of media such that the encrypted electronic data may only be accessed from the particular piece of the media.

US 5940505 provides a method for scrambling a record signal to be recorded on a record medium. The information recording method is provided with generating a scramble function to scramble the record signal in correspondence with a record medium identification code, which is set in advance to identify the record medium, scrambling the record signal by use of the generated scrambling function and outputting the scrambled record signal. The method further comprises a step of recording the scrambled record signal and the record medium identification code corresponding to the scrambled record signal to the record medium and generating an inverse scramble function to decipher the scrambled record signal on the basis of the generated scramble function and outputting the generated inverse scramble function and the record medium identification code corresponding to the generated inverse scramble function as one set to the external.

EP 1587095 A2 provides an information recording device having a recording head for recording information on a recording medium. The recording device includes an inherent ID generator that generates an inherent ID for the recording medium and an inherent ID recording unit that records the generated inherent ID on the record medium with the recording head. Moreover, the device comprises an encryption key generator that generates an encryption key, based on the inherent ID and an encryption unit that encrypts content information using the generated encryption key. A content recording unit that records the encrypted content information on the recording medium with the recording head is also comprised in the information recording device.

EP 0785547 A2 provides a method wherein a unique and permanent identifier is provided for a removable media. The identifier is preferably recorded in a previously unused or reserved portion of the media and can be generated from a combination of the originating drive serial number and the current state and time with a random number concatenated thereto. When a piece of media is loaded into a drive, the drive examines the reserved area for the presence of an identifier. If not present the drive generates and records an identifier before performing whatever disc access operation has been requested. If the identifier is present, the drive is prevented from overwriting the identifier with a new one and the disc access operations are performed immediately. Once a media is provided with its identifier, the media, and many errors associated with the media, can be tracked throughout its life.

EP 1622145 A2 provides a data writing and reproducing device using a password when writing and reproducing data. The data writing and reproducing device includes a signal processor to scramble video data using an encryption key, a data writer module to write the video data scrambled by the signal processor to a recording medium, a key input part to provide a function to input a password and a controller to generate the encryption key from the password and to provide the encryption key to the signal processor. The recording medium storing data by use of the data writing and reproducing device is reproducible only through a CSS-compliant reproducing device. Accordingly, the data is protective from illegal copying and reviewing by a third party and the possibility of hacking can be reduced.

EP 1 580 746 A1 discloses a data recording/reproduction method and recording/reproduction device for copying content data on a CD-R by using a personal computer. When the content data is not recorded in the CD-R, the ID of the CD-R and the data are recorded and the ID is stored in the personal computer used for recording the data. When the data is recorded on the CD-R, the ID is read from the CD-R. When the read ID is stored in the personal computer, the data is permitted to be recorded on the CD-R. When the read ID is not stored in the personal computer, the data is prohibited from being recorded in the CD-R.

It is therefore the object of the present invention to provide an apparatus for writing data to a medium, which is less complex and which enables copy protection of private content.

The object is achieved by an apparatus for providing encrypted data according to claim 1 and a method for providing encrypted data according to claim 12. The object is further achieved by a system according to claim 14 and an optical disk drive according to claim 15.

Embodiments are based on the finding, that copy protection can be achieved, by encrypting digital content which is stored on a storage medium, wherein the encryption is based on an encryption key having multiple encryption ingredients. One of the encryption ingredients can be an ID, which may be unique in an embodiment, and which is written to the storage medium as well. The medium ID written to the storage medium can only be generated by an embodiment upon receipt of a write request. Once the medium ID is created, it is provided to a data provider, which can in one embodiment be implemented by an application running, for example, on a PC (PC = Personal Computer). The application then encrypts the data based on the medium ID and further based on, for example, a password, a revocation key, etc. The encrypted data is then written to the storage medium by the data writer. Whenever the data is read, the medium ID is read from the storage medium and provided to a reader application, which reassembles the encryption key with the involved key ingredients, and decrypts the data. However, the data writer does not write a medium ID, which has not been generated by itself, but provided from any application from the outside. Moreover in another embodiment, application and writer can be implemented in, for example, an optical drive.

Embodiments may provide a complete set of solutions allowing the encryption of content to facilitate copy protection and content access control, as well as increased data reliability through redundancy. While content access control is accomplished by encrypting data stored on e.g. an optical disc using a user-supplied password, copy protection allows the user to prevent others from creating copies of such a medium. Combined with the possibilities of storing data redundantly and digitally signing the data to prove authenticity, all of these possibilities provide enterprises and private end users with a means necessary to share data securely using e.g. optical disc media. A user can then control who has access to the data by protecting it, for example with a password, and the user can also be sure that no unauthorized copy of the content is made.

In another embodiment the above-described mechanism is combined with a password, where in one embodiment the password may be combined with the medium ID and the result may also be written to the storage medium. A user then has the possibility of controlling the copy protection at a later point, which is supposing that the password is known. Some embodiments provide the advantage that legacy storage media and legacy readers or writers are not affected. If data is not copy protected, legacy readers could still read it, data written with a legacy writer could still be read by an embodiment.

Some embodiments therewith provide protection against unauthorized copying, not only in terms of copyright protection, but also in regard to the distribution and storage of confidential material. Embodiments allow the user to effectively reduce the risk for confidential information to leak into the public or entering the hands of unauthorized third parties by copy protection.

Embodiments allow encrypting the content that needs to be protected and storing the key on a part of the media that cannot be copied, using soft- or hardware available on the market. Access to copy protected materials will be available through embodiments of dedicated viewer or reader applications that can e.g. be provided for installation from an unencrypted part of a protected disc.

Embodiments will be described in detail in the following using the accompanying figures, in which:

Fig. 1a      shows an embodiment of an apparatus for writing;

Fig. 1b      shows an embodiment of a storage medium;

Fig. 2      shows another embodiment of an apparatus for writing;

Fig. 3a      shows an embodiment of an apparatus for providing encrypted data;

Fig. 3b      shows another embodiment of an apparatus for providing encrypted data;

Fig. 4      shows an embodiment of a cryptographic system;

Fig. 5      shows an embodiment of an optional node key structure;

Fig. 6      shows an embodiment of a medium ID structure;

Fig. 7      shows an embodiment of an anchor structure;

Fig. 8      shows an embodiment of a file fragment information table structure;

Fig. 9      shows an embodiment of a file fragment information table entry structure;

Fig. 10     shows an embodiment of a copy protection field structure;

Fig. 11     shows an embodiment of a feature descriptor and feature control field structure;

Fig. 12     shows an embodiment of a drive host authentication;

Fig. 13     shows an embodiment of a REPORT KEY command;

Fig. 14     shows an embodiment of a reply packet to a REPORT KEY command;

Fig. 15     shows an embodiment of a reply packet to a KEY CONTRIBUTION command;

Fig. 16     shows an embodiment of a reply packet to a DISC UNIQUE ID command;

Fig. 17     shows an embodiment of a SEND KEY command;

Fig. 18     shows an embodiment of an information packet attached to a SEND KEY HOST RANDOM NUMBER AND PROTOCOL VERSION command;

Fig. 19     shows an embodiment of a flow chart for an initialization and feature detection procedure for a data reader implementation;

Fig. 20     shows an embodiment of a flow chart of an initialization and feature detection procedure for a writer implementation;

Fig. 21     shows an embodiment of a feature flag mask for copy protection;

Fig. 22     shows an embodiment of a flow chart of a calculation of a copy protection state; and

Fig. 23     shows an embodiment of a flow chart of an optical disc drive state chart.

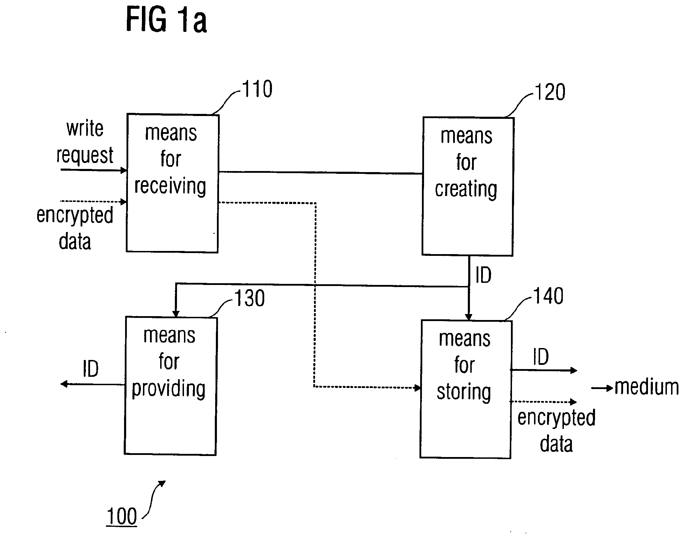

Fig. 1a shows an embodiment for an apparatus 100 for writing data to a medium. The apparatus 100 comprises a means 110 for receiving a write request and encrypted data from a data provider. Furthermore, the apparatus 100 comprises a means 120 for creating a medium ID upon receipt of the write request. The apparatus 100 further comprises a means 130 for providing the medium ID to the data provider for generating the encrypted data and a means 140 for storing the encrypted data on a medium and for storing the medium ID on the medium upon creation of the medium ID, wherein the encrypted data is encrypted based on the medium ID.

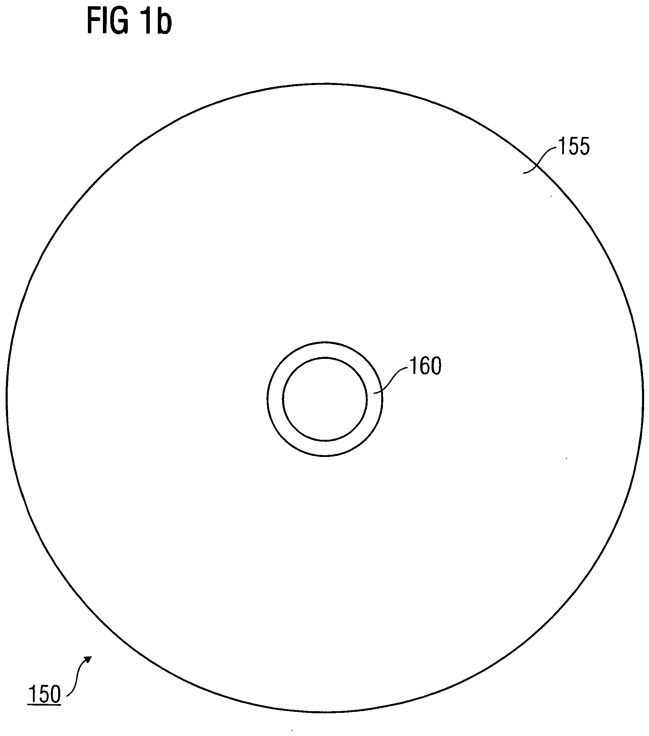

In some embodiments the means 140 can be adapted for storing the encrypted data in a data section and the medium ID in an ID section on the medium, wherein the data section is isolated or separated from the ID section. Fig. 1b shows an embodiment of a medium 150, which is exemplified as a disc, for example an optical disc, such as a CD (CD = Compact Disc), DVD (DVD = Digital Versatile Disc), or Blue-Ray disc, etc. The medium 150 depicted in Fig. 1b shows a data section 155 and an ID section 160. In one embodiment, the ID section is in a place of the medium, where only an embodiment has access. In other words, the ID section may, in embodiments, be in a physical place that is not accessible by legacy writers. The medium depicted in Fig. 1b is one embodiment, but several other realizations of ID section 160 and data section 155 are conceivable, which are separated on the disc or other media as for instance USB-memory-devices (USB = Universal Serial Bus), memory cards etc.

In other embodiments the means for storing 140 can be adapted for storing only a medium ID in the ID section 160, subsequently to creating the medium ID by the means 120 for creating a medium ID. The means 120 for creating the medium ID may be adapted for generating the ID utilizing a random or pseudo random number. In another embodiment the means 140 for storing can be adapted for storing a combination of the medium ID and a password on the medium.

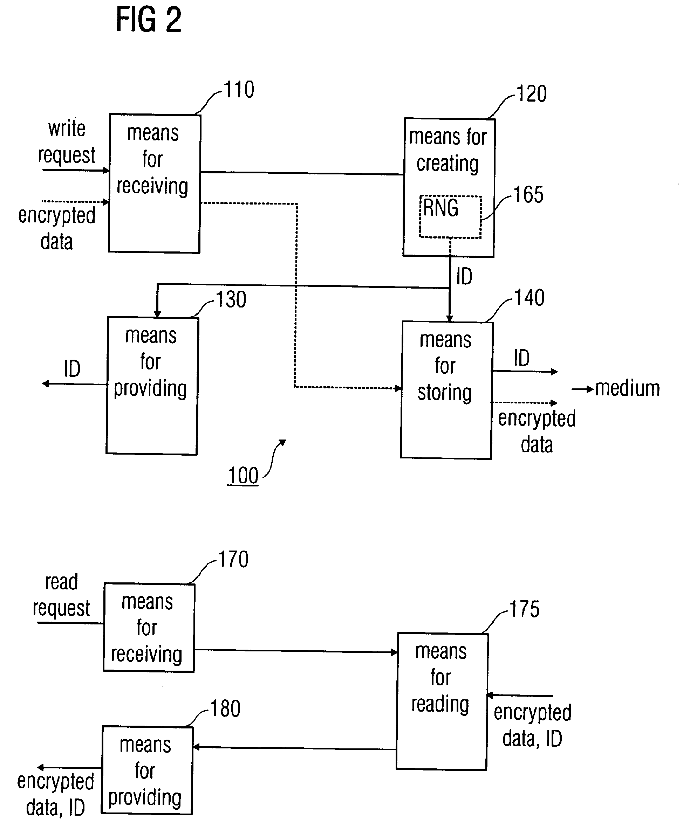

Fig. 2 shows another embodiment of an apparatus 100 for writing. In the embodiment depicted in Fig. 2, the means 120 for creating the medium ID comprises a random number generator (RNG = Random Number Generator) 165, which can in another embodiment also be a pseudo random number generator. The embodiment depicted in Fig. 2 further comprises a means 170 for receiving a read request, a means 175 for reading a medium ID and encrypted data from the medium and, moreover, a means 180 for providing the medium ID and the encrypted data. In another embodiment the means for receiving 110 and the means for receiving 170 can be implemented together. In a similar way, the means 130 for providing and the means 180 for providing may be implemented together. Moreover, the apparatus 100 for writing may be implemented in a chip or ROM (ROM = Read Only Memory), which could be comprised in an optical drive.

In another embodiment of an apparatus 100, a means for authenticating may be comprised for authenticating with a data provider or a data reader. Moreover, the means 110 for receiving may be adapted for receiving an encrypted write request from a data provider and for decrypting the write request. Consequently, the means 170 for receiving a read request can be adapted for receiving an encrypted read request and for decrypting the encrypted read request. Consequently, the means 130 and 180, for providing may be adapted for encrypting the medium ID and for providing the encrypted medium ID to a data provider or a data reader.

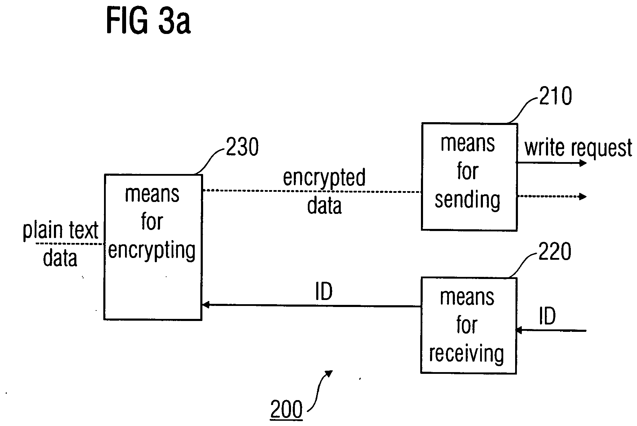

Fig. 3a shows an embodiment of an apparatus 200 for providing encrypted data to a data writer. The apparatus 200 comprises a means 210 for sending a write request to the data writer and a means 220 for receiving a medium ID from the data writer upon sending the write request. Furthermore, the apparatus 200 comprises a means 230 for encrypting plain text data using an encryption key to obtain the encrypted data, the encryption key being based on the medium ID and wherein the means 210 for sending is adapted for sending the encrypted data to the data writer.

In one embodiment the means 230 for encrypting is further adapted for using an encryption key, which is further based on a password. For example, the encryption key may result from an XOR operation between the medium ID and the password and possibly other key ingredients. In another embodiment the means 230 for encrypting may be adapted for using an encryption key, being further based on a revocation key. In one embodiment the encryption key may be an XOR operation between the three of a medium ID, a password and a revocation key.

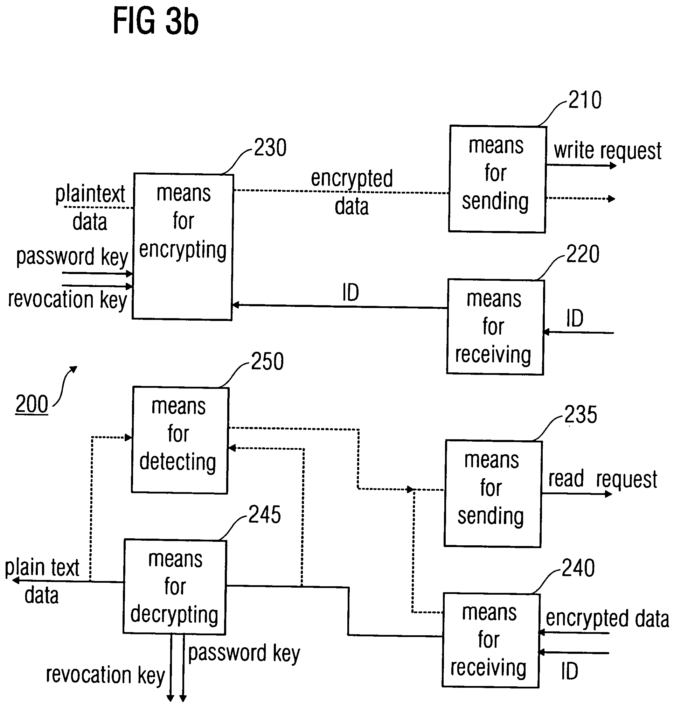

Fig. 3b depicts another embodiment of an apparatus 200 for providing encrypted data to a data writer. Fig. 3b depicts similar components as Fig. 3a, however, further comprising a means 235 for sending a read request to the data writer, a means 240 for receiving encrypted data and a medium ID and a means 245 for decrypting data based on a decryption key to obtain plain text data. In one embodiment the means 245 for decrypting may be adapted for using a decryption key being based on a medium ID, a password or a revocation key. In an embodiment the decryption key may be based on an XOR operation between the medium ID, a password or a revocation key.

In embodiments the means 210 for sending and the means 235 for sending may be implemented together. In a similar way, the means 220 for receiving and the means 240 for receiving may be implemented together. In another embodiment the means 230 for encrypting may be further adapted for encrypting an information on an encrypted password in the data. In another embodiment the apparatus 200 further comprises a means 250 for detecting a copy protection indication from the encrypted data or the plain text data. The means 210 for sending may be adapted for not sending a write request, when a copy protection indication is detected. In a similar way, the means 220 for receiving the medium ID may be adapted for not receiving a medium ID when the copy protection indication is detected and the means 230 for encrypting may be adapted for not encrypting data, when the copy protection indication is detected. In another embodiment the copy protection indication corresponds to control information within the encrypted or plain text data, the encrypted or plain text data having plain text control information.

In another embodiment, similar to what has been said above, the apparatus 200 for providing encrypted data may further comprise a means for authenticating with a data writer, and the means 210 and 235 for sending can be adapted for sending encrypted read or write requests and, accordingly, the means 220 and 240 for receiving can be adapted for receiving an encrypted medium ID.

In another embodiment system may comprise an apparatus 100 for writing data and an apparatus 200 for providing encrypted data according to the above embodiments. Moreover, the system may be comprised in an optical drive, and the medium may correspond to an optical storage medium such as a CD, DVD or Blue-Ray disc.

Embodiments enable copy protection, by making sure that parts of, for example a disc cannot be copied using available software/recorder commands. To accomplish this goal, embodiments generate medium IDs for each disc when it is first used with an embodiment. In embodiments the medium IDs can be unique respectively an identical medium IDs repeats or is generated very rarely. In the following the medium ID is also called unique ID, indicating that these IDs repeat very rarely. The unique ID can be in one embodiment 128-bit random number to be generated by the embodiment's firmware or random number generator, or pseudo random generator, when the copy protection feature is applied to a particular disc for the first time. Although the unique ID may not be definitely unique, as there's a probability of repetition when drawing the e.g. 128-bit numbers, they may be called unique in the following.

A unique ID is then written to a location on the disc than cannot be copied without modifications to the writer, e.g. to the firmware. Such locations can include the lead in of DVDs. The unique ID will be read out by e.g. the firmware and used for calculating a content access key and, once the content access key has been verified, it can be requested by a host application through dedicated multimedia read commands. It will be then transferred to the host application protected by a bus key that has previously been established using drive host authentication. The unique ID will be lost during a copying process from one medium to another. Without the corresponding unique ID, the content cannot be decrypted. Therefore, a copy of such a media that has been protected against copying by using the unique ID as an access key ingredient will be useless, as the copy will not have the same unique ID. As already mentioned above, this mechanism can be combined with password protection in some embodiments.

In the following, a detailed embodiment will be described, which is called SecurDisc. Copy protection and access control are enabled by encrypting the data that is written to the media, such that only when the encryption key is known the drive or driver delivers the correct data. The encryption key is derived either from a user pass phrase, the DUID (DUID = Disc Unique ID), or both, and combined with a shared secret known only to authorized applications. This shared secret can be revoked in the case of an application being compromised, corresponding to a revocation key. The sources for building the revocation key are called Key Ingredients$_x$.

The DUID can be derived from the data writer, which will be referred to in the following as a drive, or optical drive. The DUID is not stored in the user data area of the disc, but on a special location chosen individually for each optical disc type, such that it cannot be copied without firmware modification, which is also called the ID section in the embodiments described above. SecurDisc does not require any dedicated type of optical storage media.

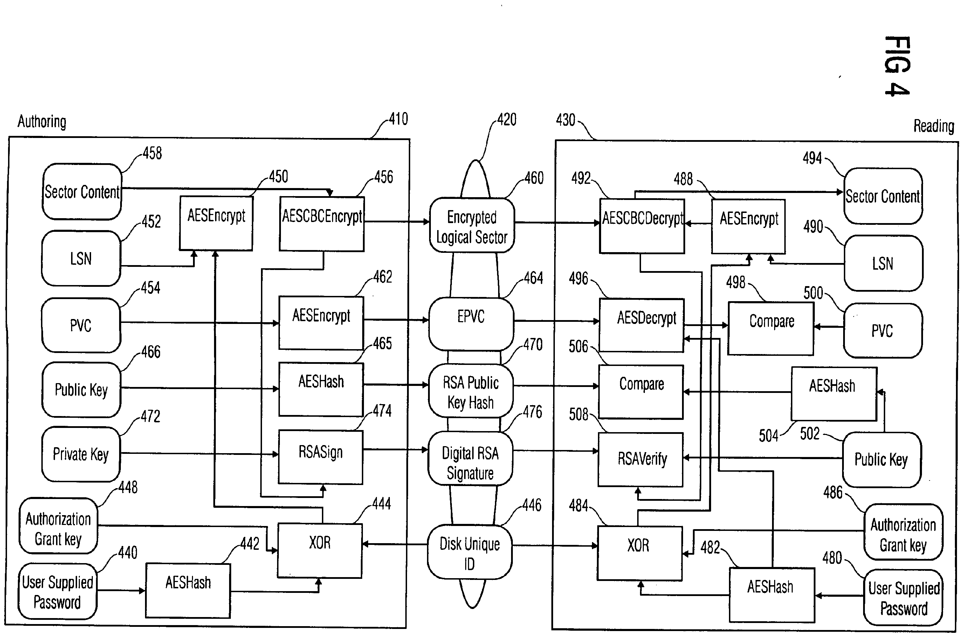

Fig. 4 illustrates an embodiment of a cryptographic system and provides an overview of the cryptographic system used for SecurDisc, however, not all components shown in Fig. 4 are relevant for embodiments enabling copy protection and access control. Fig. 4 shows components 410, which are utilized for authoring the content of the medium 420. Moreover, Fig. 4 shows components 430, which are utilized for reading the content of the medium 420.

Cryptographic functionality is comprised in both an optical drive and a host, with data read from and written to the media 420. Fig. 4 shows a diagram illustrating the cryptographic functionality required to protect a medium 420 against copying an unauthorized access and to digitally sign data.

One of the authoring components 410 is a user-supplied password 440, which is supplied to an AESHash 442 function (AES = Advanced Encryption Standard) creating a first key ingredient, which is provided to an XOR operational block 444. The XOR operational block 444 is further provided with a disc unique ID 446 and an authorization grant key 448, which specifies a key that is derived from a revocation block. Resulting from the XOR operational block 444, the encryption key is provided to the AES encryption block 450. The AES encryption block 450 further receives a logical sector number 452 and a pass phrase verification checksum (PVC = Pass phrase Verification Checksum) 454, which is a licensed value, used to verify the validity of the user's applied pass phrase. The output of the AES encryption block 450 is then provided to the AESCBC encryption block 456 (CBC = Cipher Block Chaining), which is a special mode of operation for block ciphers. The AESCBC encryption block 456 is further provided with a sector content 458, so an encrypted logical sector 460 can be written to the medium 420.

Another AES encryption block 462 derives an EPVC (EPVC = Encrypted PVC) 464 based on the PVC 454 and the AESHash 442. Based on a public key 466 another AESHash 468 provides an RSA public key hash 470 (RSA = Initials of Surnames of Inventors, Rivest, Shamir and Adleman). Using a private key 472, an RSA signature block 474, which is also based on the AESCBC encryption block 456 output, derives a digital RSA signature 476, which can also be stored on the medium 420.

On the reading side, similar components 430 can be found. From a user supplied password 480 and AESHash 482 can provide a key ingredient to an XOR operational block 484. The XOR operational block 484 further receives an authorization grant 486 and the disc unique ID 446 from the medium 420, in order to provide an encryption key to the AESEncryption block 488. Based on a logical sector number 490, the AESEncryption block 488 can provide a decryption key to the AESCBC decryption block 492, which can then decrypt the encrypted logical sector 460 and provide a sector content 494. An AESDecryption block 496 provides, based on the output of the AES hashing block 482 and the encrypted PVC 464 a decrypted PVC for comparison in block 498, which compares the value to the PVC 500, and enables a verification of the user pass phrase.

Based on a public key 502 and another AES hashing block 504, another comparison can be carried out in a comparison block 506 with an RSA hash key 470 from the medium 420. Based on the public key 502 and the output of the AESDecryption block 496 and RSA verification block 508 can verify the digital RSA signature 476 from the medium 420.

The authorization grant keys 448 and 486, specify a key that is derived from a revocation block, also called revocation key in the embodiments described above. A revocation block specifies a binary tree that will be traversed to obtain a revocation block node key. In some embodiments the input to the traversing function can be a 32-bit value, the function which traverses the bits of this value, starting with the most significant bit, as it traverses the binary tree. Starting at the root node, it will branch left if the current bit is set to, for example, the zero bit, and branch right if the current bit is set to the one bit, unless it encounters a node that does not have a left or a right child, depending on which one is required according to the current bit. If such a node carries a NK (NK = Key Node), this key is returned along with the current bit position within the 32-bit value. If the node does not carry a NK, the function aborts with an error indicating that the component associated with the 32-bit value has been revoked.

Once a revocation block NK is obtained, it can be used to create a final key value, when combined with a single entry or an entry or an array KC[] consisting of 32-keys. The entry is determined by the bit position x that was last processed when traversing the binary tree. The final key value K can be built using the following formula:

$$K = KESencrypt (KC[x], NK).$$

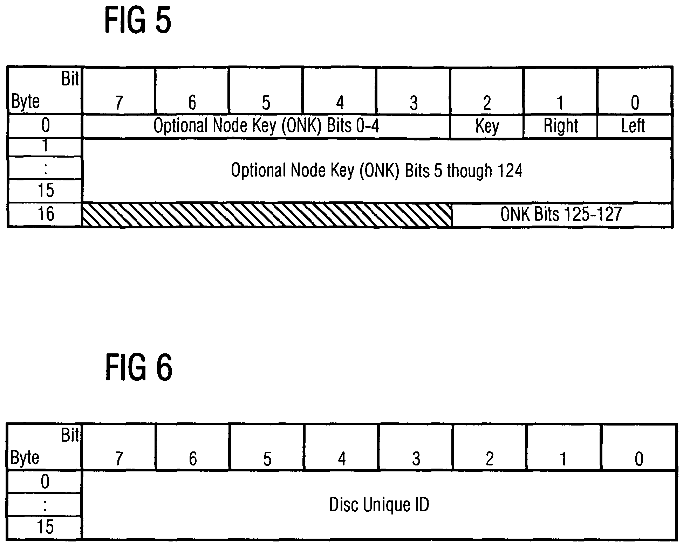

The binary tree is stored as a bit-stream, which is iterated when starting from the route node, e.g. in the sequence of parent, left child and right child. This means that when processing a node, first the current node is written out, then, the iteration process recursively continues with the left child node, if it exists. Finally, the iteration process recursively processes the child node. For example, for each node it writes out the structure depicted in Fig. 5. Fig. 5 shows a tabular notation, in which 8 bits or one byte are depicted in a row of the table and the number of rows correspond to the number of bytes within the structure. The structure will be detailed starting from the top right corner, which corresponds to the first bit of the structure and is labeled "left" in Fig. 5. In an embodiment, e.g. if this bit is set to one, this node has a left hand child node. The next bit is labeled "right" and e.g. if this bit is set to one, this node has a right hand child node. The bit labeled with "key" indicates that a node key immediately follows this bit. The fields labeled with "optional node key" specifies a 128-bit node key. This field is only present if the "key" bit immediately preceding this field, is set to one.

Media that have been written using one of the SecurDisc features may contain extra information specifying redundancy definitions, keys and identifiers used for data security and copy protection. Some of this information may be stored outside a user data area, as for example an ID section on an optical disc that supports SecurDisc copy protection. Fig. 6 shows an embodiment of a medium ID or disc unique ID. The disc unique ID shown in Fig. 6 is a 128-bit random number generated by an optical disc drive, when it is requested for the first time, on a write once, or sequential writing media when the area in which it is stored is written. A host can get access to the disc unique ID only by successfully completing drive host authentication, as it will be described below. The storage location on the disc unique ID depends on the physical media format. In the following, different media formats supported by SecurDisc will be detailed. For example, on DVD+R/+RW media, the disc may be stored in buffer zone 2, however, other locations may be possible. A storage location may be chosen which does not interfere with other copy protection technologies.

SecurDisc media may contain some of the information required for enhanced security and reliability in the user data area or data section 155, according to Fig. 2. This information can be file system independent and may also work with ISO 9660/Joliet and all flavors of UDF (UDF = Universal Data Format).

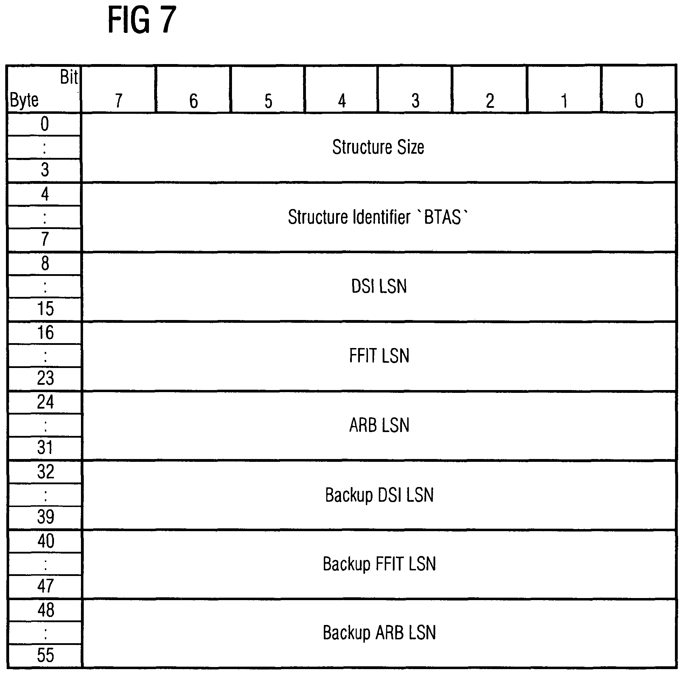

Fig. 7 shows a basic SecurDisc technology anchor structure (BTAS = Basic SecurDisc Technology Anchor Structure). The BTAS can e.g. be located in RLSN 15 (RLSN = Relative Logical Sector Number), relative to the beginning of a SecurDisc enabled recording session at offset RBP 64 (RBP = Relative Byte Position). Moreover, one redundant copy of BTAS can be located at either the last LSN of a SecurDisc enabled recording session, or the logical sector immediately preceding the secondary AVDP (AVDP = Anchor Volume Description Pointer). The BTAS references an FFIT (FFIT = File Fragment Information Table) and a redundancy information block, as well as a second redundancy backup copy of each of these structures, and thus serves as an anchor for all SecurDisc structures located in the user data area. Fig. 7 shows an embodiment of an exemplified BTAS.

Fig. 7 shows a field for the structure size which specifies the total size of the structure in bytes as a Big-Endian value, which can for example always be 56-bytes. Moreover, Fig. 7 shows a structure identifier "BTAS", which contains an ASCII (ASCII = American Standard Code for Information Interchange) representation of "BTAS" identifying the structure as a SecurDisc technology anchor structure.

The field DSILSN (DSI = Disc Security Information) specifies the logical sector number of the disc security information structure as a Big-Endian value. If this security information is not present, all bytes of this field are set to zero. Furthermore, Fig. 7 shows the FFITLSN, which specifies the logical sector number of the FFIT as a 64-bit Big-Endian value.

Another field shown in Fig. 7 is the ARBLSN (ARB = Application Revocation Lock) and specifies the logical sector number of ARB as a 64-bit Big-Endian value, or a field filled with zeros, if no ARB is present. The ARB is required in the embodiments for all media that use copy protection or pass phrase protection features of SecurDisc. An ARB is a revocation block, which can be used to revoke compromised applications.

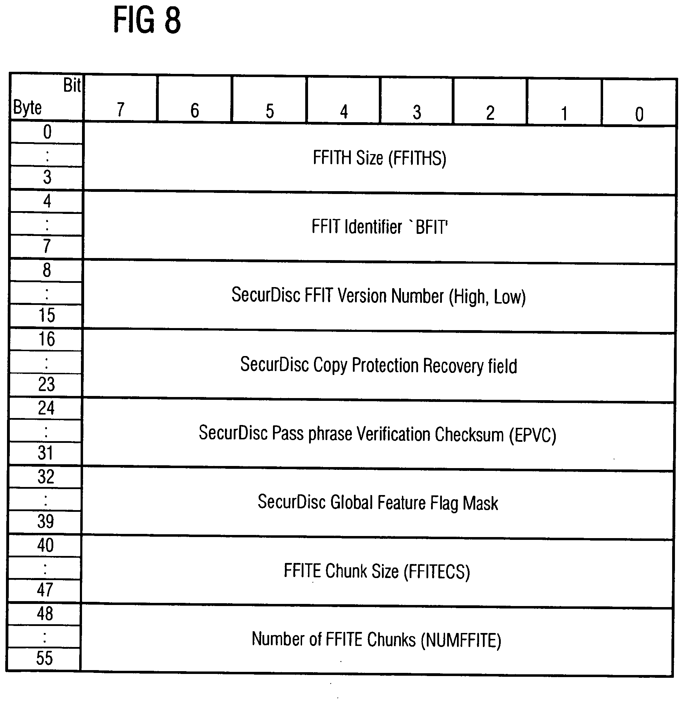

Fig. 7 further shows "Backup DSILSN"-, "Backup FFITLSN"- and "Backup ARBLSN"-fields, which specify the logical sector numbers of the respective backup structures. The FFIT contains information about each contiguous area of the disc that is managed by SecurDisc, such contiguous areas may include files that are copy protected or pass phrase protected, as well as files protected by checksums. The FFIT is stored after all other files on the disc, to allow checksums to be generated on-the-fly during the recording process. The location of the FFIT is flexible, the FFIT is referenced by the BTAS. It begins with a header and an embodiment of a structure is shown in Fig. 8.

Header information is comprised in the FFITH (FFITH = FFIT Header) field containing version information and a field indicating the different SecurDisc features that are used on any part of the media. A backup of the FFIT is referenced by the BTAS as mentioned above. Its location may be freely selected. However, to achieve maximum reliability, the backup FFIT should be physically distant from the first copy of the FFIT, as a minimum requirement, the backup FFIT can be stored in a packet different to the primary FFIT.

As indicated in Fig. 8, the structure starts with the "FFITH Size"-field (FFITHS = FFITH size), which specifies the total size of the FFITH and bytes as a Big-Endian value. In one embodiment the structure size may always be 40bytes. Moreover, Fig. 8 shows the FFIT identifier, which contains a ASCII representation of the string "BFIT" identifying the structure as a SecurDisc file fragment information table.

Moreover, Fig. 8 shows a SecurDisc FFIT version number, which specifies a version number of the structure. The first byte contains a high version number the second byte contains a low version number. The high version number is 01h in one embodiment. An implementation may only rely on the layout of the remaining information of the FFITH and its FFITE (FFITE = FFIT Entry) if the high version number is 01h. If only the low version number is higher than the version number an implementation supports, the implementation may still rely on the structures that have been defined in a previous version of an embodiment.

Furthermore, Fig. 8 shows a SecurDisc "Copy Protection Recovery"-field, which comprises the 128-bit disc unique ID encrypted with a 128-bit AES key value derived from a special copy protection recovery pass phase calculated as described above. There may be no pass phrase verification checksum for this value in another embodiment. If no copy protection recovery pass phrase has been specified during the authoring process all bytes of this field may be set to zero.

Moreover, Fig. 8 shows a SecurDisc pass phrase verification checksum, which comprises an 128-bit checksum that can be used to verify the correctness of the pass phrase entered by a user. The pass phrase verification checksum has a fixed value PVC, which can be encrypted using the key contribution derived from the user pass phrase, as it was described above.

Furthermore, there is a SecurDisc global feature flag mask in Fig. 8 comprising the result of an XOR operation, combining all feature flag masks of all FFITE of this FFIT. Fig. 8 also shows an FFITE chunk size, which is a 32-bit Big-Endian value in this embodiment, and all FFITE may be stored as a chunked information list with a fixed chunk size. At the bottom of the structure shown in Fig. 8 there is a number of FFITE chunks, which specifies the number of FFITE chunks contained in the file fragment information table as a 64-bit Big-Endian value. The chunk list of FFITE starts immediately after the FFITH, as depicted in Fig. 8. The FFITH may grow as additional fields are added in further embodiments. The location of the FFITE can be calculated as

$$\text{FFITEOFFSET[0]} = \text{FFITLSN} * \text{BPS} + \text{FFITHS}$$

$$\text{FFITELSN[0]} = \text{FFITEOFFSET[0]} \quad \text{DIV} \quad \text{BPS}$$

$$\text{FFITERBP[0]} = \text{FFITEOFFSET[0]} \quad \text{MOD} \quad \text{BPS}$$

with FFITEOFFSET[0] being the relative bit position (RBP = Relative Bit Position) of the first FFITE relative to the beginning of the user data area of the disc, BPS is the number of bytes per sector and FFITELSN is the LSN of the FFIT.

The result of this operation is FFITELSN[0], the LSN of the first FFITE and FFITERBP[0], the relative byte position of the first FFITE from the beginning of the sector specified by the FFITELSN[0].

FFITE are stored in ascending order of their fragments' LSN. The location of a particular entry x is calculated as

$$\text{FFITEOFFSET[x]} = \text{FFITEOFFSET[0]} + x * \text{FFITECS}$$

$$\text{FFITELSN[x]} = \text{FFITEOFFSET[x]} \quad \text{DIV} \quad \text{BPS}$$

$$\texttt{FFITERBP[x]} \qquad = \texttt{FFITEOFFSET[x]} \quad \texttt{MOD} \quad \texttt{BPS} ,$$

where FFITEOFFSET[x] is the RBP of the x-th FFITE relative to the beginning of the user data area of the disc, x is a number between 0 and NUMFFITE-1 and FFITECS is the FFITE content size.

The result of this operation is FFITELSN[x], the LSN of the x-th FFITE and FITERBP[x], the relative byte of the x-th FFITE from the beginning of the sector specified by FFITELSN[x].

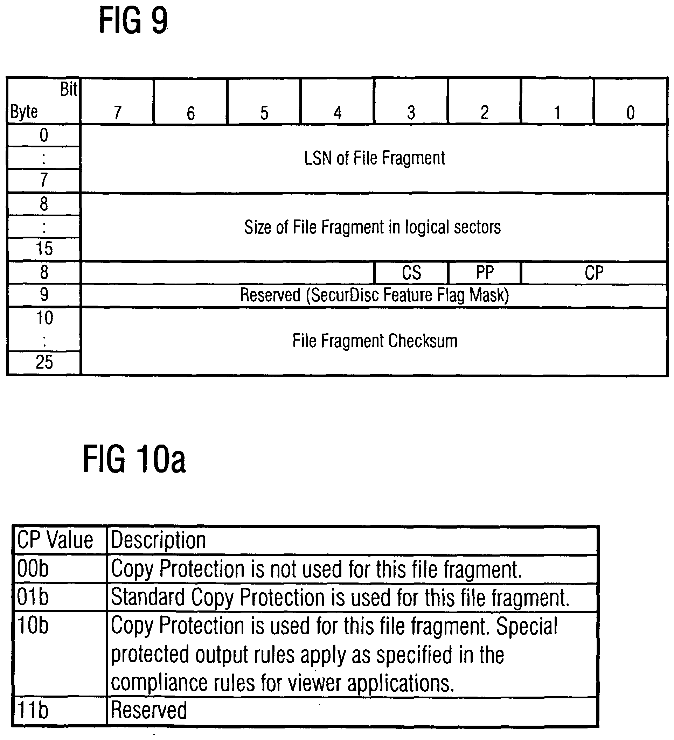

An embodiment of an FFITE structure is shown in Fig. 9. Fig. 9 shows an "LSN of File Fragment"-field, which specifies the LSN of the file fragment managed by the FFITE. Moreover, a field is dedicated to the size of the file fragment in logical sectors, specifying the size of the file fragment managed by the FFITE in logical sectors. A logical sector is the smallest logical unit for SecurDisc. If a sector is not used completely, the remaining space can be filled with zeros in this embodiment.

A pass phrase protected field "PP" comprises a flag, also being part of the SecurDisc feature flag mask. If true, the file fragment managed by this FFIT is pass phrase protected. The "CS"-field is also part of the SecurDisc feature flag mask. If true, the content of the file fragment managed by this FFITE can be verified using a "File Fragment Checksum"-field stored in this FFITE.

The "CP"-field is part of the SecurDisc feature flag mask. It can assume four distinct conditions regarding copy protection for the file fragment managed by this FFITE as specified in the Table in Fig. 10a. Fig. 10a shows an embodiment of the copy protection values, indicating whether copy protection is used or not for this file fragment, and whether special protected output rules apply.

Fig. 9 further shows the file fragment checksum in case the "CS"-flag is true, this field may contain a AES-128 cryptographic hash of the file fragment managed by this FFITE. If the CS flag is false, this field may contain all zeros. Moreover, Fig. 9 shows in row 9, a space that can be reserved for SecurDisc feature flag mask extensions.

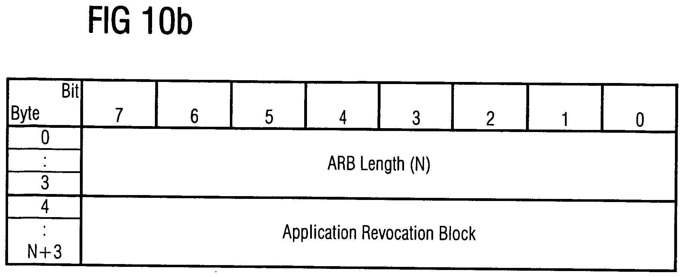

Fig. 10b shows an embodiment of an application revocation block structure (ARB = Application Revocation Block). The primary and backup ARB are referenced by the BTAS. The allocation may be freely selected. However, to achieve maximum reliability, the backup ARB should be physically distant from the primary ARB copy. In one embodiment, the minimum requirement would be to store the backup ARB in a different packet than the primary ARB.

The application revocation block, as exemplified in Fig. 10b, may serve as a key ingredient and has two fields. According to Fig. 10b, the "ARB Length"-field specifies the length of the application revocation block in bytes as a Big-Endian WORD value. The "Application Revocation Block"-field specifies the application revocation block in the format of a revocation block, as described above.

All communication between an ODD and a host may take place using extensions to existing MtFuji and MMC commands or new commands. Some constants and identifiers in embodiments have been assigned temporary values but may be assigned different values in a standardization process, embodiments may use official identifiers and constants. Embodiments are therefore not restricted to the absolute values mentioned in this specification.

Part of an embodiment of SecurDisc, can be that a SecurDisc feature descriptor allows the host to determine whether SecurDisc is supported by an optical disc drive and whether the optical disc currently in the drive can be used with SecurDisc. In an embodiment the feature will be set to active regardless of whether an optical disc has already been written to using SecurDisc or not. An optical disk drive (ODD = Optical Disk Drive) may support a GET CONFIGURATION command as specified by the MMC/MtFuji (MMC = Multimedia Command) specification and it may be used to obtain the feature descriptor from the ODD. The execution of this command may not be required prior drive host authentication.

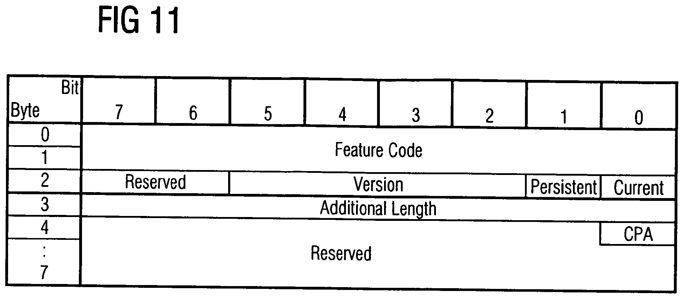

An embodiment of a feature descriptor structure is depicted in Fig. 11. The structure in Fig. 11 shows a feature code, which could for example be 0113h (Big-Endian) for an embodiment of Securdisc. The "Current"-field comprises a flag indicating whether an optical disc can be used for Securdisc recording is in the drive. The "Persistent"-field comprises a flag indicating that the status of the current flag may change any time, in other embodiments it may always be set to true. Moreover, the "Version"-field may always be set to zero for a version of an embodiment. It is meant to change, only if any optical disc drive side changes may occur in the future. The "Reserved"-field is reserved and may contain only zeros in this embodiment. The "Additional Lengths"-field may be set to 4 to allow for future extensions. If the CPA (CPA = Copy Protection Active) is set to true, this flag specifies that the Securdisc copy protection feature can be used with the optical disc that is currently inserted in a drive.

After the Securdisc feature descriptor is read, the host may make sure that it is working with a licensed Securdisc drive. Reading the Securdisc feature descriptor can be mandatory for drive host authentication to work in some embodiments. During drive host authentication, in addition to making sure that both the host application and the optical disc drive are licensed components, a bus key can be established. This bus key is used later to exchange cryptographic data for copy protection. Drive host authentication may be required before writing any Securdisc content.

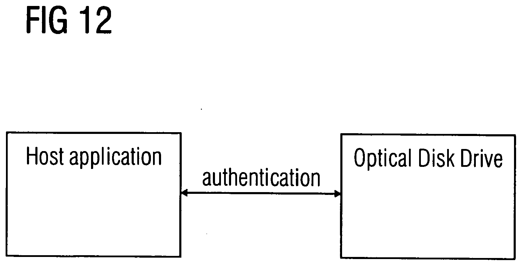

During authentication, both host and drive can be assigned a set of keys. These keys can be used to establish a shared secret, the bus key, which can serve for encrypted communication between host application and the ODD. Fig. 12 illustrates a drive host authentication.

The host may request an AGID (AGID = Authentication Grand ID) from the drive for process identification.

The AGID can from then on, be passed with every REPORT KEY or SEND KEY command to allow the drive to distinguish parallel authentication sequences in an embodiment. The drive may reply with an AGID and a protocol version number. In an embodiment if the host supports a more recent version of the protocol, it may choose to support the older protocol version, if this is permitted by eventual respective compliance rules. In addition to the AGID and the version number, the drive may return its DEVID (DEVID = Device ID). If the host chooses to abort authentication it may do so by issuing a REPORT KEY INVALIDATE AGID command.

In some embodiments the drive can make sure that the protocol version number matches a supported protocol versions.

If the media allows copy protection to be used, i.e. if CPA is set to true in the feature description, the host may issue a REPORT KEY Disc Unique ID command to receive the DUID, encrypted with the bus key KB, which is in the following called drive host authentication Type 1. It will decrypt and store the DUID for use with encryption/decryption of file fragments. The REPORT KEY DUID may only be issued as part of the drive host authentication sequence if the CPA flag is set to true, i.e. within drive host authentication Type 1. Even if the CPA flag is true, the REPORT KEY command may be omitted, using so-called drive host authentication Type 2, which will be described below and in which's case the drive will not generate or read a DUID.

The host can then release the AGID acquired by issuing a REPORT KEY INVALIDATE AGID as the last step of the authentication sequence. Drive host authentication can be performed through the REPORT KEY and SEND KEY commands as e.g. defined in MMC/MtFuji. A new key class for SecurDisc can be defined to distinguish the new authentication method from existing ones. The intermediary key class value for SecurDisc can be set to 21h, which is currently reserved in MMC/MtFuji. If any SEND KEY or REPORT KEY commands are sent in the wrong order, the drive may terminate the inappropriate command with CHECK CONDITION status.

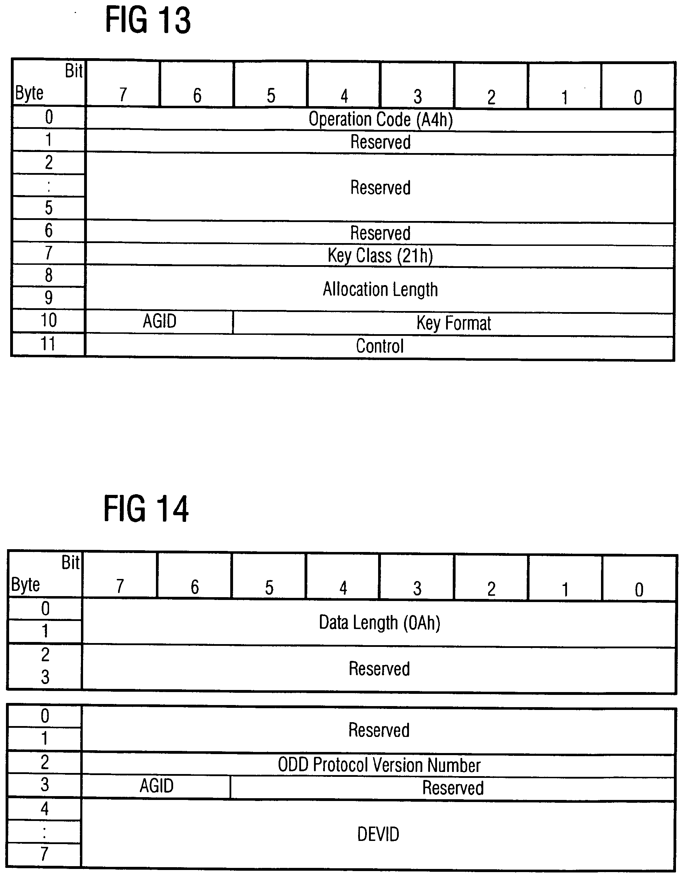

Fig. 13 shows an embodiment of a structure of a REPORT KEY command. The command decryptor block of the REPORT KEY command can be used to address information from the ODD according to Fig. 13. The operational code may always be set to A4h in an embodiment. The key class can specify the key class and may be set to 21h for an embodiment of SecurDisc. The allocation length specifies the maximum transfer size for drive to host communication as a Big-Endian WORD value. It can match the size of the buffer reserved on the host side for receiving the data returned by the drive. If this field is zero, no data will be transferred. This condition does not necessarily have to be an error.

The "Key Format"-field specifies the kind of information requested by the host as a 6bit Big-Endian value. The "AGID"-field can comprise the authentication grant ID, for the REPORT KEY AGID command, the AGID may be set to zero, which will be detailed below. For all other REPORT KEY requests, it can be set to the AGID returned by the REPORT KEY AGID. The "Control"-field comprises a control byte as specified by MMC/MtFuji. Its semantics depend on the bus type used for sending the MMC command.

The ODD may reply to a REPORT KEY AGID and protocol version command with a reply packet, of which an embodiment of a structure is detailed in Fig. 14. The data length may specify the size of the reply packet without the "Data Length"-field itself. This value may always be 0Ah in one embodiment for the REPORT KEY AGID reply packet. The "Reserved"-field comprises reserved bits, which may be set to zero in this embodiment. The "ODD Protocol Version Number"-field may specify the protocol version for the authentication sequence spoken by the ODD. If the host supports a more recent version of the protocol but still supports the protocol version supported by the ODD, the host may choose to use the old protocol version to complete the authentication sequence. For a version of the embodiment, the protocol version number can be 00h.

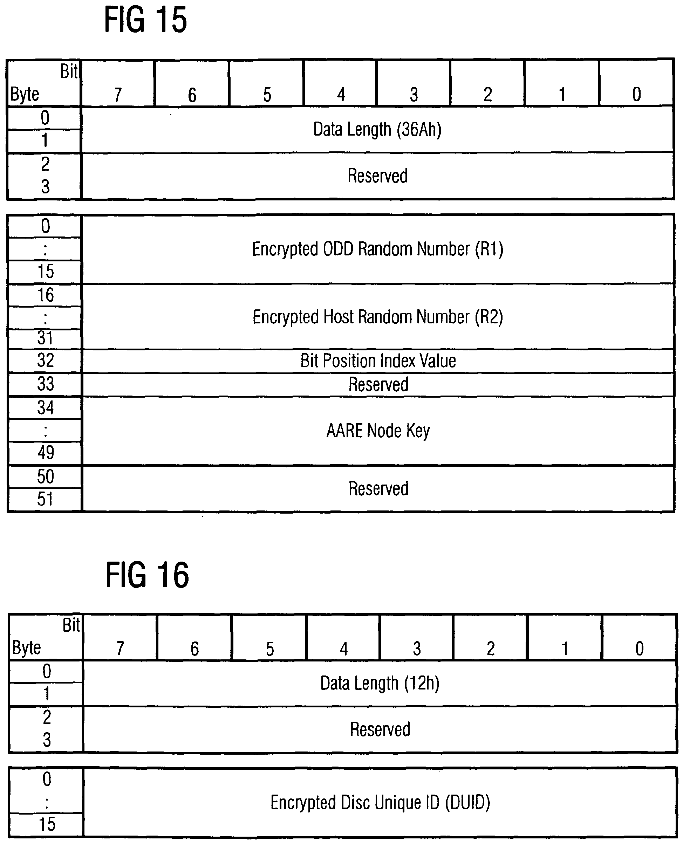

The AGID contains the AGID reserved for this authentication process by the ODD. The AGID can be passed to all following REPORT KEY and SEND KEY commands. The DEVID specifies the device ID assigned to the ODD. The ODD may reply to a REPORT KEY ODD Key Contribution command with a reply packet, which is detailed in Fig. 15. The "Data Length"-field can specify the size of the reply packet without the "Data Length"-field itself. This value can be 36h for the REPORT KEY ODD Key Contribution reply packet in this embodiment. The "Reserved"-field comprises reserved bits, which may all be set to zero. The "Encrypted ODD Random Number"-field may contain a 128bit random number R1 generated by the ODD, encrypted using a secret key PK2 that has been assigned to the application. The "Encrypted Host Random Number"-field may contains a 128bit random number R2 previously sent to the ODD by the host, encrypted using a secret key PK2 that has been assigned to the application as follows, where R1 and R2 are encrypted in AES-CBC mode. The host must use

$$R1 \parallel R2 = \text{AESCBCDecrypt} \ (PK2, \ R1 \parallel R2)$$

to obtain the correct result.

A "Bit Position Index Value"-field may specify the bit position corresponding to the node key in the application revocation block returned by the ODD. It is also the index inside the key contribution array used by the application to calculate PK2. Again, the "Reserved"-field comprises all reserved bits which may all be set to zero. The "AARB Node Key" specifies the node key returned by the ODD, which may be combined with the key contribution array stored inside the application and allows the application to calculate PK2.

The ODD replies to a REPORT KEX ODD Disc Unique ID with a reply packet, which is exemplified in Fig. 16. Fig. 16 shows a "Data Length"-field, which may specify the size of the reply packet without the "Data Length"-field itself. This value may always be 12h for the REPORT KEY Disc Unique ID in the reply packet of this embodiment. Again a "Reserved"-field indicates reserved bits, which can all be set to zero. The "Encrypted Disc Unique ID" contains the 128bit DUID, encrypted with the bus key KB. The REPORT KEY INVALIDATE AGID command invalidates the AGID. The ODD replies to a REPORT KEY INVALIDATE AGID command with an empty reply packet and "GOOD"-status indication. After that, the host may no longer use the AGID to issue any SEND KEY or REPORT KEY commands until it is reassigned to the host as a result of another REPORT KEY AGID and protocol version command.

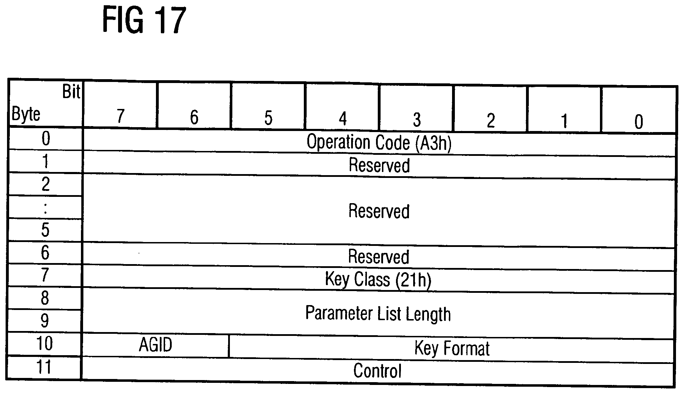

The command descriptor block of the SEND KEY command used to send information to the ODD is depicted in Fig. 17. The "Operation Code"-field may be always set to A3h in this embodiment. The "Key Class" specifies the key class and may be set to 21h for SecurDisc in an embodiment. The "Parameter List Length"-field specifies the number of bytes to be transferred from the host to the ODD as a Big-Endian WORD value. In some embodiments if this field is zero, no data may be transferred. The "Key Format"-field specifies the kind of information sent to the ODD as a 6bit Big-Endian value. The "AGID"-field contains the authentication grant key and can be set to the AGID returned by a REPORT KEY AGID for all SEND KEY requests. The "Control"-field contains a control byte as specified by MMC/MtFuji. Its semantics depend on the bus type used for sending the MMC command.

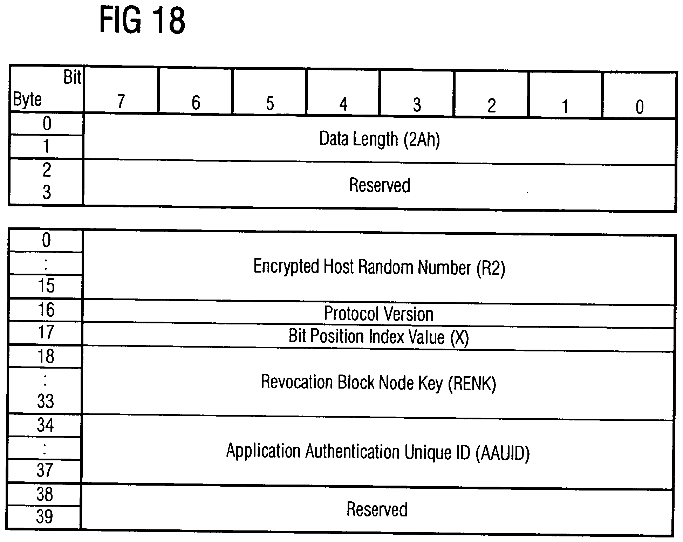

Attached to a SEND KEY host random number and protocol version command the host may send an information packet, which is exemplified in Fig. 18. The "Data Length"-field can specify the size of the information packet without the "Data Length"-field itself. This value may always be 2Ah for the SEND KEY host random number and protocol version information packet. The "Reserved"-field indicates the reserved bits, which are all set to zero. The "Encrypted Host Random Number"-field may contain a 128-bit random number R2 created by the host, encrypted using the secret key PK1 that has been assigned to the ODD. The "Protocol Version"-field may contain a protocol version and can be set to 00h in this embodiment. The "Bit Position Index Value"-field specifies an index within the PK1[] array assigned to the ODD that should be used by the drive to build PK1. The "Revocation Block Node Key"-field specifies the node key associated with position x in the DRB as a 128bit key value. The "Application Authentication Unique ID" may specify an application authentication unique ID which may be used by the ODD to carry out AARB parsing.

Before any of the SecurDisc features is used for recording, the host implementation can ensure that the drive is a licensed SecurDisc drive and that the media can be used for SecurDisc recording or has been written using the SecurDisc feature. A reader implementation needs a SecurDisc drive only if the copy protection feature of SecurDisc is used on the media to be read. Depending on whether the implementation is a reader or recorder implementation, a number of different checks can be carried out before reaching initialized state.

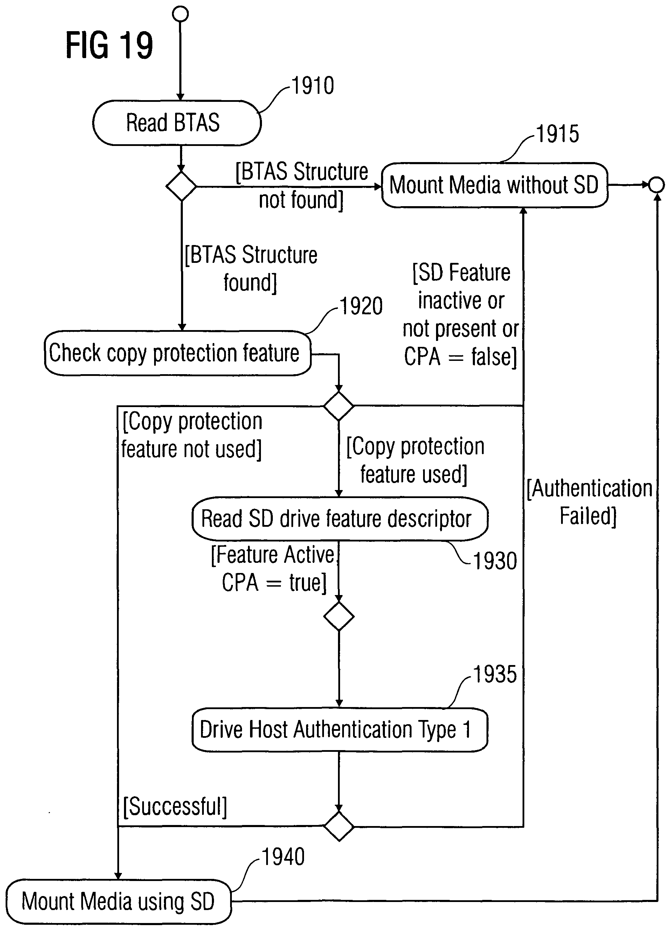

Fig. 19 shows an embodiment of an initialization and SecurDisc feature detection implementation in terms of a flow chart. The flow chart illustrates the reader perspective of a SecurDisc initialization sequence. This sequence is repeated every time a disc change event occurs. In a first step 1910 the reader tries to read the BTAS. By reading the BTAS, the host makes sure that the media in the drive has been written with SecurDisc enabled. If the BTAS structure is missing, the media can be mounted without SecurDisc support in a step 1915. If the BTAS structure is found, the host checks the global feature flag mask of the SecurDisc FFIT to determine whether copy protection is used in a step 1920. If the copy protection feature is used, the host retrieves the SecurDisc drive feature descriptor in a step 1930 and checks whether the SecurDisc feature is supported and whether the current media type supports the copy protection feature, i.e. whether the CPA flag is set to true. If the drive does not support SecurDisc at all, or no copy protection compatible media is in the drive, the media is mounted without SecurDisc support in step 1915. Otherwise a drive host authentication Type 1 procedure can be carried out in step 1935. In case authentication fails the drive is considered not capable of processing copy protected SecurDisc media, the media is mounted without SecurDisc copy protection support in step 1915. Type 1 drive host authentication reads the Disc Unique ID from the media. If the authentication is successful, the media is mounted using SecurDisc in step 1940. In case the first copy of the BTAS structure cannot be read, for example due to a defect in the media, the backup BTAS structure can be sought by scanning the media backwards, e.g. starting with the last written LSN.

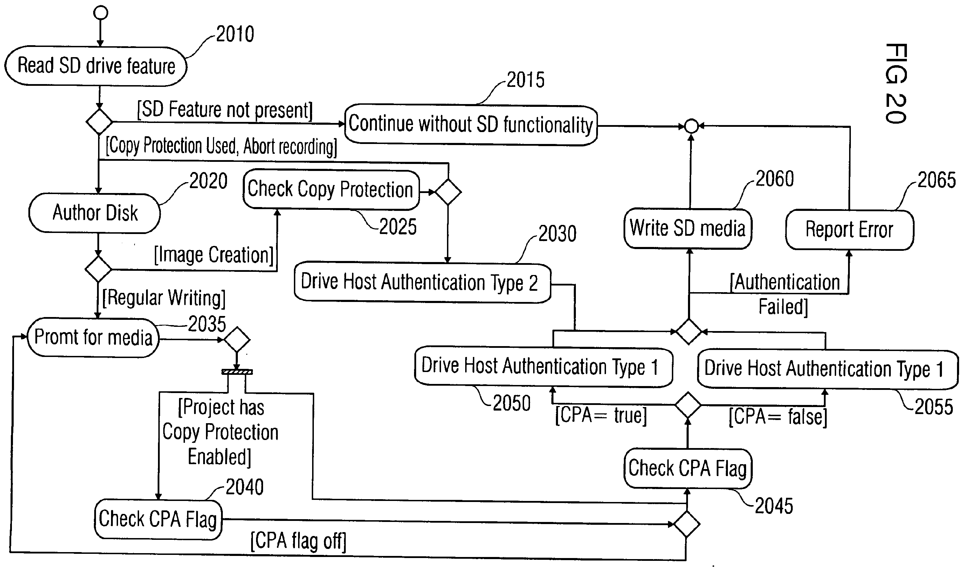

In contrast to a reader implementation, a recording application does not depend on the SecurDisc media type when authoring a medium. Rather, it would usually prompt the user to insert the correct type of blank media as required. In an embodiment of an initialization sequence for recording applications is depicted in Fig. 20. Note that creating SecurDisc images may be permitted only if a SecurDisc recorder is attached to the system. In this case, the SecurDisc recorder will be used to perform drive host authentication Type 2 to make sure it is authentic. Writing an image may not be possible with SecurDisc compilations that support copy protection.

Fig. 20 shows the host retrieving the SecurDisc drive feature descriptor in step 2010 as described above, and the host checks whether the SecurDisc feature is supported or not. If the drive does not support SecurDisc at all, the authoring process continues without SecurDisc support in step 2015.

The application allows the user to author and configure a project in a step 2020. The result is a project with a unique combination of SecurDisc features used. When creating a SecurDisc image, copy protection may not be used which is checked in step 2025. If the image is copy protected, the recording is aborted, otherwise drive host authentication Type 2 according to step 2030 is carried out. If no image is created, the user is prompted for a media that supports SecurDisc in step 2035. The media is then recognized based on the feature descriptor as described above having a SecurDisc feature set to active.

If the project is configured to be copy protected, even if it is partially copy protected, only media having the CPA flag set to active in the feature descriptor as described above may be accepted for writing. Therefore, the CPA flag is checked in step 2040, if the project has copy protection enabled. If copy protection is enabled but the media does not support copy protection, it is prompted again for other media in step 2035. Otherwise, the CPA flag is checked in step 2045 if the CPA flag is true drive host authentication Type 1 is performed in step 2050, otherwise drive host authentication Type 2 is performed in step 2055. Type 1 drive host authentication reads the disc unique ID from the media. In case the authentication fails, the drive is considered not capable of processing SecurDisc media, the media is mounted without SecurDisc support. If any authentication is successful, the host writes the project to the SecurDisc media in a step 2060 and if the drive host authentication fails, the host will report an error to the user in step 2065. The application could also give hints on how to get SecurDisc to work again in case a component has been revoked.

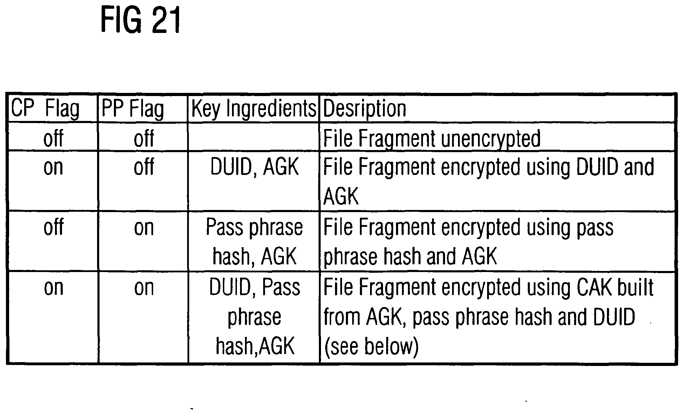

In order to calculate a certain content access key (CAK = Content Access Key) encrypting a particular file fragment, the SecurDisc feature flag mask stored in the FFIT as described above, can be used to determine, which key ingredients may be combined to build the CAK. In an embodiment there are two sources of key ingredients, a hash generated from the author supplied pass phrase and the DUID. These two key ingredients can be combined freely for each individual fragment. Fig. 21 shows all combinations of the copy protection flag and the pass phrase flag and their according descriptions. The first combination in the table of Fig. 21 is trivial, since the file fragment is an unencrypted file. When encountering a file fragment with a described flag combination, no encryption has been applied to that file fragment and it can be used immediately without any further transformation. In the remaining cases, the CAK is calculated depending on the Copy Protection (CP) and the Pass Phrase (PP) flags taking into account the DUID, the pass phrase hash or both, are always combined with the AGK (AGK = Authorization Grant Key) as will be described in detail in the following.

The CAK for file fragments, can for example be calculated as follows, wherein each key ingredient has e.g. a width of 128bits:

$$CAK = KI_0\ XOR\ KI_1\ XOR\ [\ldots]\ XOR\ KI_{n-1}\ ,$$

wherein n is the number of ingredients to the access key.

For file fragments that have the PP flags set in the FFITE, the host may calculate a 128bit key ingredient $KI_x$ from the user supplied pass phrase. For this purpose, a 16-bit unicode representation of the user pass phrase may be copied into a buffer, which is then padded with zero valued bytes to be a multiple of 128bits. The key ingredient $KI_x$ is then calculated as follows:

$$KI_x = AESHash(buffer).$$

User pass phrases are always case sensitive and can have a minimum length of 16 characters.

Before using the key ingredient $KI_x$ the host may verify that the correct pass phrase is supplied by the user. This can be done by decrypting the encrypted SecurDisc PVC as described above using the key ingredient $KI_x$ as follows:

$$PVC' = AESDescrypt(KI_x,\ EPVC).$$

The value PVC' is then compared to PVC. If PVC equals PVC', the correct pass phrase has been provided by the user.

For file fragments that have the PP flag set in the FFITE, the host may obtain the DUID from the drive using the protocol as described above. The ingredient $KI_x$ may then be calculated as follows:

$$KI_x = EASHash\ (DUID).$$

If the original author of a disc has set a recovery pass phrase for copy protection, the SecurDisc "Copy Protection Recovery"-field of the FFITE as defined above, may be used to retrieve the DUID without obtaining it from the drive as specified above. In this mode of operation, the DUID may be obtained from the "SecurDisc Copy Protection Recovery"-field (BCPRF = SecurDisc Copy Protection Recovery field) as follows:

1. If all bits of BCPRF are zero, no recover pass phrase has been set. The copy protection may not be undone.

2. Calculate a copy protection recovery key (CPRK = Copy Protection Recovery Key) from a pass phrase entered by the user as specified above.

3. Calculate the DUID as follows:

$$DUID = AESDecrypt\ (CPRK,\ BCPRF).$$

To obtain the AGK (AGK = Authorization Grant Key), the host processes the ARB as described above. The resulting AGK is created from the AUID and the AGKC (AGKC = AGK Contributor), both of which may be licensed cryptographic secrets and constants as described above. For encryption and decryption of individual logical sectors on the disc, a key that is cryptographically derived from the CAK as described above can be used.
To calculate the key used for a particular sector, AES-128 in counter mode is used to derive the sector key from the CAK as follows:

$$KS_x = AESEncrypt\ (CAK,X),$$

where X is the LSN of the sector to be decrypted.
The sector key is then used to encrypt/decrypt the corresponding sector using AESCBCEncrypt($KS_x$,content)/AESCBCDecrypt($KS_x$,content).
If the CS flag of the corresponding FFITE of a file fragment is set, the fragment can be verified using a 128-bit checksum stored in the same FFITE.
The checksum can be calculated from the content of a file fragment for instance using the following function:

$$CHECKSUM = AESHash(FFC),$$

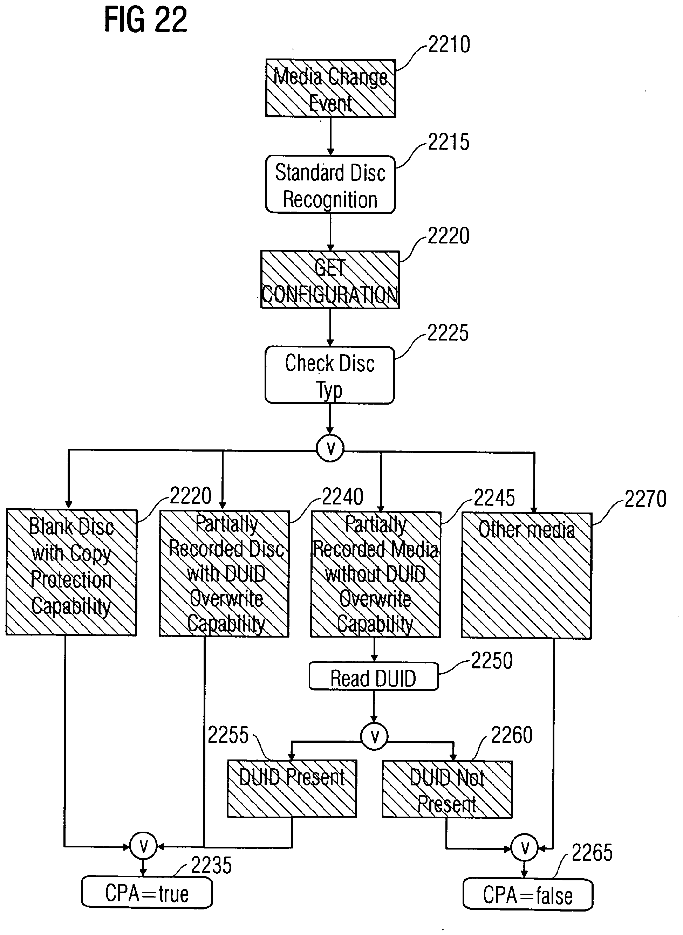

where FFC is the content of all logical sectors the file fragment consists of concatenated. If the last logical sector is not used entirely, it can be padded with zeros. Content of all logical sectors means the user payload of all logical sectors as written on the media with no preprocessing such as decryption applied.
A host can verify the validity of a file on a SecurDisc enabled disc by checking all corresponding file fragments against their file fragment checksums. If any of the file fragments has a wrong checksum, the file is considered corrupted. If a defective packet is found while reading the file the host may use redundancy information if present to reconstruct the correct checksum.
The drive can calculate the DUID as part of the authentication sequence when CPA equals true. The DUID may be generated as a 128bit random number when the REPORT KEY DUID is issued and no DUID is present on the disc.
When receiving a FEATURE REQUEST command from the host, the ODD may try to read the DUID from the media. It can cache the DUID in its RAM until it is requested by the host using the Report Key DUID command. Alternatively, the ODD may read the DUID during drive host authentication when executing the REPORT KEY DUID command as specified above. The ODD may only do the latter if calculating the CPA flag does not require knowledge of the DUID state.
When the host requests the SecurDisc feature descriptor, the ODD calculates the CPA flag that is part of the feature descriptor and determines the type of drive host authentication that is performed as indicated in Fig. 22. In a first step 2210, an immediate change event occurs which is followed by a standard disc recognition step 2215. After a disc has been recognized, the configuration is read in a step 2220 and the disc type is checked in a step 2225.
Four different types of discs may be distinguished. In step 2230 a blank disc with copy protection capability is detected. Therewith the CPA is set to true in step 2235. In step 2240, a partially recorded rewriteable media with DUID overwrite capability is detected, and accordingly the CPA flag is set to true in step 2235 as well. In step 2245 a partially recorded write once media or rewriteable media without DUID overwrite may be detected. Accordingly, in step 2250 the DUID is read and if the DUID is present in step 2255 the CPA is set to true in step 2235 accordingly. If the DUID is not present as indicated in step 2260, the CPA flag is set to false as indicated in step 2265. If any other media is detected in step 2270 the CPA is also set to false in step 2265.

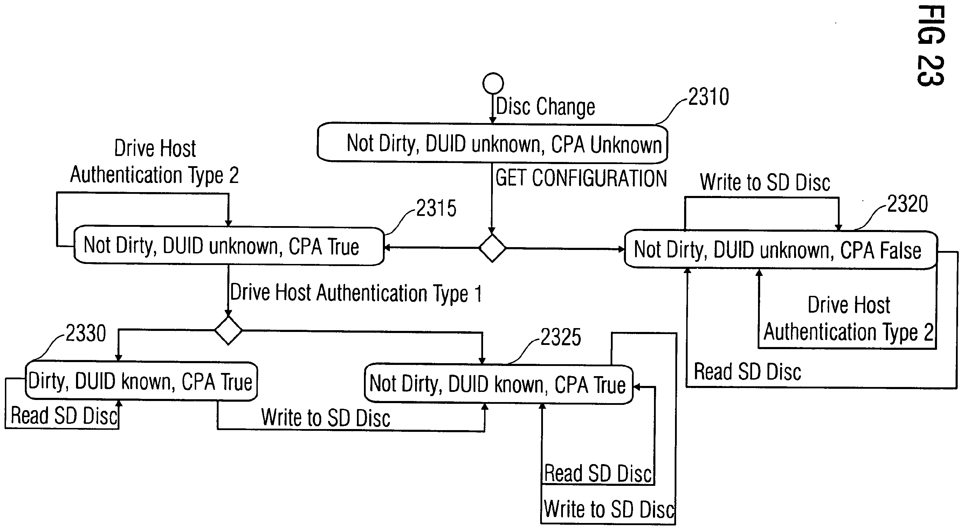

Fig. 23 illustrates a flow chart of the different states of an ODD with respect to an embodiment of SecurDisc. Again, there are two types of drive host authentications in which Type 1 in the flow chart of Fig. 23 means drive host authentication with reading the DUID, whilst Type 2 means drive host authentication without reading the DUID, in line with what was described above. Type 1 authentication may only take place if the CPA flag is set to true, Type 2 authentication may be performed whenever Type 1 authentication may take place but it never changes the internal state of the drive. A Type 2 authentication may also take place when the CPA flag is set to false, even when there is no disc in the drive.

Each state of the flow chart in Fig. 23 can be described using three variables. The first one is a flag called "dirty". If this flag is true, the DUID is known to the ODD, it may have been generated by the ODD but has not been synchronized with the media. If this flag is false, the DUID is either not known to the ODD or it is in sync with the DUID stored on the media. In other words, if the DUID is known to the ODD, this flag specifies whether the DUID has been written to the media.

The next flag is a "DUID known" flag. If it is set to true, the DUID is known to the ODD because it has either been generated or read from the media. If it is set to false, the DUID is unknown because it has either not yet been read from the media, or because it is not present on the media. Therewith the flag specifies whether the DUID is known to the ODD.

A "CPA" flag specifies whether the media in the drive can be used for copy protection. If it is set to true, the media may be used for writing copy protected files. If it is false, the media cannot be used for writing copy protected files. If the flag is unknown, then the flag has not been evaluation yet.

When a disc change occurs, the first state of the ODD is state 2310, in which the dirty flag is false, DUID is unknown and CPA is also unknown. The host then issues the GET CONFIGURATION command to retrieve the feature descriptor of the SecurDisc feature. The state of the ODD changes in respect to the CPA feature, which is known to be either true or false, when the command is completed, and which is indicated by the steps 2315 in case the CPA is set to true and 2320 in the case of the CPA is set to false. Proceeding further from step 2315, the drive host authentication Type 2 may be performed, however, this type of authentication never changes the state of the ODD. When performing drive host authentication Type 1, the DUID becomes known. If the DUID was read from the media, the dirty flag will be set to false, according to step 2315. If the DUID was generated during the drive host authentication Type 1, the dirty flag becomes true according to step 2330, the SecurDisc media can be read without leaving state 2330. However, if data is written to SecurDisc, the dirty flag is set to false again, and the ODD accordingly converts to state 2325. The state change occurs since the DUID is written to the SecurDisc media. Once this state is reached in step 2325, neither reading data from the SecurDisc, nor writing data to the SecurDisc yields any state changes.

If the CPA flag was detected to be false in the beginning, the ODD changes to state 2320. In state 2320 data can be written to the SecurDisc media and also be read from the SecurDisc media. Moreover, drive host authentication Type 2 may be performed. All these actions will not yield any state changed from state 2320.

Embodiments provide the advantage that copy protection and access control can be controlled by commercial and private users. With the embodiment of SecurDisc, a powerful feature set is provided, which enables copy protection and access control, data safety and data verification, as well as digital signatures and content verification.

Depending on certain implementation requirements of the inventive methods, the inventive methods can be implemented in hardware or in software. The implementation can be performed using a digital storage medium, in particular a disc, DVD or CD having electronically readable control signals stored thereon, which cooperate with a programmable computer system, such that the inventive methods are performed. Generally, the present invention is, therefore, a computer program product with a program code stored on a machine-readable carrier, the program code being operative for performing the inventive methods when the computer program product runs on a computer. In other words, the inventive methods are, therefore, a computer program having a program code for performing at least one of the inventive methods when the computer program runs on a computer.

## LIST OF REFERENCE SIGNS

100   Apparatus for Writing
110   Means for Receiving
120   Means for Creating
130   Means for Providing

140 Means for Storing
150 Medium
155 Data Section
160 ID Section
165 Random or Pseudo Random Generator
170 Means for Receiving
175 Means for Reading
180 Means for Providing

200 Apparatus for Providing
210 Means for Sending
220 Means for Receiving
230 Means for Encrypting
235 Means for Sending
240 Means for Receiving
245 Means for Decrypting
250 Means for Detecting

410 Authoring Components
420 Medium Components
430 Reading Components
440 User's Applied Password
442 AESHash
444 XOR
446 DUID
448 Authorization Grant Key
450 AESEncryption
452 LSN
454 PVC
456 AESCBCEncryption
458 Sector Content
460 Encrypted Logical Sector
462 AESEncryptor
464 EPVC
466 Public Key
468 AesHash
470 RSA Public Key Hash
472 Private Key
474 RSA Signature
476 Digital RSA Signature
480 User Supply Password
482 AESHash
484 XOR
486 Authorization Grant Key
488 AESEncryption
490 LSN
492 AESCBCDecryption
494 Sector Content
496 AESDecrpytion
498 Compare

500 PVC
502 Public Key
504 AESHash
506 Compare
508 RSA Verification

1910 Read BTAS

1915    Mount without SecurDisc
1920    Check Copy Protection
1930    Read Feature Descriptor
1935    Drive Host Authentication Type 1
1940    Mount Media with SecurDisc

2010    SecurDisc Feature Descriptor
2015    Continue without SecurDisc Functionality
2020    Author Project
2025    Check for Copy Protection
2030    Drive Host Authentication Type 2
2035    Prompt for Media
2040    Check CPA Flag
2045    Check CPA Flag
2050    Drive Host Authentication Type 1
2055    Drive Host Authentication Type 2
2060    Write SecurDisc Media
2065    Report Error

2210    Media Change Event
2215    Standard Disc Recognition
2220    Get Configuration
2225    Check Disc Type
2230    Blank Disc with Copy Protection Capability
2235    CPA equals True
2240    Partially Recorded Disc with DUID Overwrite Capability
2245    Partially Recorded Media without DUID Overwrite Capability
2250    Read DUID
2255    DUID Present
2260    DUID Not Present
2265    CPA equals false
2270    Other Media

2310    Not Dirty, DUID unknown, CPA Unknown
2315    Not Dirty, DUID unknown, CPA True
2320    Not Dirty, DUID unknown, CPA False
2325    Not Dirty, DUID known, CPA True
2330    Dirty, DUID known, CPA True

**Claims**

1. Apparatus (200) for providing encrypted data to a data writer, comprising;
a means (210) for sending a write request to the data writer;
a means (220) for receiving a medium ID (446) from the data writer upon sending the write request; and
a means (230) for encrypting (450) plain text data using an encryption key to obtain the encrypted data, the encryption key being based (444) on the medium ID (446), a password (440) and a revocation key (448) revoking a shared secret only known to authorized applications in the case of an application being compromised; and
wherein the means (210) for sending is adapted for sending the encrypted data to the data writer.

2. Apparatus (200) of claim 1, further comprising a means (235) for sending a read request to a data reader, a means (240) for receiving encrypted data and a medium ID, and a means (245) for decrypting data based on a decryption key to obtain plain text data.

3. Apparatus (200) of one of claim 1 or 2, wherein the means (245) for decrypting is adapted for using a decryption key being based on a medium ID, a password, or a revocation key.

4. Apparatus (200) of one of the claims 1 to 3, wherein the means (230) for encrypting is further adapted for encrypting an information on an encrypted password in the encrypted data.

5. Apparatus (200) of one of the claims 1 to 4, further comprising a means (250) for detecting a copy protection indication from the encrypted data or the plain text data.

6. Apparatus (200) of claim 5, wherein the means (210) for sending the write request is adapted for not sending a write request when a copy protection indication is detected.

7. Apparatus (200) of claim 5 or 6, wherein the means (220) for receiving a medium ID is adapted for not receiving the medium ID when the copy protection indication is detected.

8. Apparatus (200) of one of the claims 5 to 7, wherein the means (230) for encrypting is adapted for not encrypting data when the copy protection indication is detected.

9. Apparatus (200) of one of the claims 5 to 8, wherein the copy indication protection corresponds to a control bit within the encrypted or plain text data, the encrypted or plain text data having a plain text control information.

10. Apparatus (200) of one of the claims 1 to 9, further comprising a means for authenticating with the data writer an wherein the means (210; 235) for sending are adapted for sending an encrypted read or write request and the means (220;240) for receiving are adapted for receiving an encrypted media ID.

11. Apparatus (200) of claim 1, wherein the revocation key (448) is derived from a revocation block, the revocation block specifying a binary tree to be traversed for obtaining a revocation block node key

12. Method for providing encrypted data to a data writer, comprising:

sending a write request to the data writer;
receiving a medium ID (446) from the data writer upon sending the write request;
encrypting (450) plain text data using an encryption key to obtain the encrypted data, the encryption key being based (444) on the medium ID (446), a password (440) and a revocation key (448) revoking a shared secret only known to authorized applications in the case of an application being compromised; and
sending the encrypted data to the data writer.

13. Computer program having a program code for performing the method of claim 12, when the computer program runs on a computer.

14. System, comprising
an apparatus (100) for writing data to a medium, comprising

a means (110) for receiving a write request and encrypted data from a data provider;
a means (120) for creating a medium ID upon reception of the write request;
a means (130) for providing the medium ID to an apparatus (200) for providing encrypted data; and
a means (140) for storing the encrypted data on the medium and for storing the medium ID on the medium upon creation of the medium ID, wherein the encrypted data is encrypted based on the medium ID;

and the apparatus (200) for providing encrypted data to the apparatus (100) for writing data, comprising

a means (210) for sending the write request to the apparatus (100) for writing data;
a means (220) for receiving the medium ID from the apparatus (100) for writing data upon sending the write request; and
a means (230) for encrypting plain text data using an encryption key to obtain the encrypted data, the encryption key being based (444) on the medium ID (446), a password (440) and a revocation key (448) revoking a shared secret only known to authorized applications in the case of an application being compromised; and
wherein the means (210) for sending is adapted for sending the encrypted data to the apparatus (100) for writing data.

15. Optical drive comprising a system of claim 14.

**16.** Optical drive comprising a firmware according to claim 13.

**Patentansprüche**

**1.** Vorrichtung (200) zum Bereitstellen von verschlüsselten Daten an einen Datenschreiber, wobei dieselbe folgende Merkmale aufweist:

> eine Einrichtung (210) zum Senden einer Schreibeaufforderung an den Datenschreiber;
> eine Einrichtung (220) zum Empfangen einer Medium-ID (446) von dem Datenschreiber auf das Senden der Schreibeaufforderung hin; und
> eine Einrichtung (230) zum Verschlüsseln (450) von Klartextdaten unter Verwendung eines Verschlüsselungsschlüssels, um die verschlüsselten Daten zu erhalten, wobei der Verschlüsselungsschlüssel auf der Medium-ID (446), einem Passwort (440) und einem Aufhebungsschlüssel (448) basiert (444), der in dem Fall, in dem eine Anwendung kompromittiert ist, ein gemeinsames Geheimnis aufhebt, das nur autorisierten Anwendungen bekannt ist; und
> wobei die Einrichtung (210) zum Senden dazu angepasst ist, die verschlüsselten Daten an den Datenschreiber zu senden.

**2.** Vorrichtung (200) gemäß Anspruch 1, die ferner eine Einrichtung (235) zum Senden einer Leseaufforderung an einen Datenleser, eine Einrichtung (240) zum Empfangen von verschlüsselten Daten und einer Medium-ID sowie eine Einrichtung (245) zum Entschlüsseln von Daten auf der Basis eines Entschlüsselungsschlüssels, um Klartextdaten zu erhalten, aufweist.

**3.** Vorrichtung (200) gemäß Anspruch 1 oder 2, wobei die Einrichtung (245) zum Entschlüsseln dazu angepasst ist, einen Entschlüsselungsschlüssel zu verwenden, der auf einer Medium-ID, einem Passwort oder einem Aufhebungsschlüssel basiert.

**4.** Vorrichtung (200) gemäß einem der Ansprüche 1 bis 3, wobei die Einrichtung (230) zum Verschlüssen ferner dazu angepasst ist, Informationen über ein verschlüsseltes Passwort in den verschlüsselten Daten zu verschlüsseln.

**5.** Vorrichtung (200) gemäß einem der Ansprüche 1 bis 4, die ferner eine Einrichtung (250) zum Detektieren eines Kopierschutzhinweises aus den verschlüsselten Daten oder den Klartextdaten aufweist.

**6.** Vorrichtung (200) gemäß Anspruch 5, wobei die Einrichtung (210) zum Senden der Schreibeaufforderung dazu angepasst ist, keine Schreibeaufforderung zu senden, wenn ein Kopierschutzhinweis detektiert wird.

**7.** Vorrichtung (200) gemäß Anspruch 5 oder 6, wobei die Einrichtung (220) zum Empfangen einer Medium-ID dazu angepasst ist, die Medium-ID nicht zu empfangen, wenn der Kopierschutzhinweis detektiert wird.

**8.** Vorrichtung (200) gemäß einem der Ansprüche 5 bis 7, wobei die Einrichtung (230) zum Verschlüsseln dazu angepasst ist, Daten nicht zu verschlüsseln, wenn der Kopierschutzhinweis detektiert wird.

**9.** Vorrichtung (200) gemäß einem der Ansprüche 5 bis 8, wobei der Kopierschutzhinweis einem Steuerbit in den verschlüsselten oder den Klartextdaten entspricht, wobei die verschlüsselten oder die Klartextdaten Klartextsteuerinformationen aufweisen.

**10.** Vorrichtung (200) gemäß einem der Ansprüche 1 bis 9, die ferner eine Einrichtung zur Authentifizierung mit dem Datenschreiber aufweist, wobei die Einrichtung (210; 235) zum Senden dazu angepasst ist, eine verschlüsselte Lese- oder Schreibeaufforderung zu senden, und die Einrichtung (220; 240) zum Empfangen dazu angepasst ist, eine verschlüsselte Medien-ID zu empfangen.

**11.** Vorrichtung (200) gemäß Anspruch 1, wobei der Aufhebungsschlüssel (448) aus einem Aufhebungsblock abgeleitet wird, wobei der Aufhebungsblock einen Binärbaum angibt, der durchlaufen werden muss, um einen Aufhebungsblockknotenschlüssel zu erhalten.

**12.** Verfahren zum Bereitstellen von verschlüsselten Daten an einen Datenschreiber, wobei das Verfahren folgende Schritte aufweist:

Senden einer Schreibeaufforderung an den Datenschreiber;

Empfangen einer Medium-ID (446) von dem Datenschreiber auf das Senden der Schreibeaufforderung hin;

Verschlüsseln (450) von Klartextdaten unter Verwendung eines Verschlüsselungsschlüssels, um die verschlüsselten Daten zu erhalten, wobei der Verschlüsselungsschlüssel auf der Medium-ID (446), einem Passwort (440) und einem Aufhebungsschlüssel (448) basiert (444), der in dem Fall, in dem eine Anwendung kompromittiert ist, ein gemeinsames Geheimnis aufhebt, das nur autorisierten Anwendungen bekannt ist; und

Senden der verschlüsselten Daten an den Datenschreiber.

13. Computerprogramm mit einem Programmcode zum Ausführen des Verfahrens gemäß Anspruch 12, wenn das Computerprogramm auf einem Computer abläuft.

14. System, das folgende Merkmale aufweist:

eine Vorrichtung (100) zum Schreiben von Daten auf ein Medium, wobei dieselbe folgende Merkmale aufweist:

eine Einrichtung (110) zum Empfangen einer Schreibeaufforderung und verschlüsselter Daten von einem Datenbereitsteller;

eine Einrichtung (120) zum Erzeugen einer Medium-ID auf den Empfang der Schreibeaufforderung hin;

eine Einrichtung (130) zum Bereitstellen der Medium-ID an eine Vorrichtung (200) zum Bereitstellen von verschlüsselten Daten; und

eine Einrichtung (140) zum Speichern der verschlüsselten Daten auf dem Medium und zum Speichern der Medium-ID auf dem Medium auf die Erzeugung der Medium-ID hin, wobei die verschlüsselten Daten basierend auf der Medium-ID verschlüsselt sind;

und die Vorrichtung (200) zum Bereitstellen von verschlüsselten Daten an die Vorrichtung (100) zum Schreiben von Daten, wobei dieselbe folgende Merkmale aufweist:

eine Einrichtung (210) zum Senden der Schreibeaufforderung an die Vorrichtung (100) zum Schreiben von Daten;

eine Einrichtung (220) zum Empfangen der Medium-ID von der Vorrichtung (100) zum Schreiben von Daten auf das Senden der Schreibeaufforderung hin; und

eine Einrichtung (230) zum Verschlüsseln von Klartextdaten unter Verwendung eines Verschlüsselungsschlüssels, um die verschlüsselten Daten zu erhalten, wobei der Verschlüsselungsschlüssel auf der Medium-ID (446), einem Passwort (440) und einem Aufhebungsschlüssel (448) basiert (444), der in dem Fall, in dem eine Anwendung kompromittiert ist, ein gemeinsames Geheimnis aufhebt, das nur autorisierten Anwendungen bekannt ist; und

wobei die Einrichtung (210) zum Senden dazu angepasst ist, die verschlüsselten Daten an die Vorrichtung (100) zum Schreiben von Daten zu senden.

15. Optisches Laufwerk, das ein System gemäß Anspruch 14 aufweist.

16. Optisches Laufwerk, das eine Firmware gemäß Anspruch 13 aufweist.

**Revendications**

1. Appareil (200) pour fournir des données cryptées à un moyen d'écriture de données, comprenant:

un moyen (210) destiné à envoyer une demande d'écriture au moyen d'écriture de données;

un moyen (220) destiné à recevoir une ID de support (446) du moyen d'écriture de données à l'envoi de la demande d'écriture; et

un moyen (230) destiné à crypter (450) les données en texte plein à l'aide d'une clé de cryptage pour obtenir les données cryptées, la clé de cryptage étant basée (444) sur l'ID de support (446), un mot de passe (440) et une clé de révocation (448) révoquant un secret partagé connu uniquement des applications autorisées au cas où une application est compromise; et

dans lequel le moyen (210) destiné à envoyer est adapté pour envoyer les données cryptées au moyen d'écriture de données.

**EP 1 855 281 B1**

**2.** Appareil (200) selon la revendication 1, comprenant par ailleurs un moyen (235) destiné à envoyer une demande de lecture à un lecteur de données, un moyen (240) destiné à recevoir les données cryptées et une ID de support, et un moyen (245) destiné à décrypter les données sur base d'une clé de décryptage pour obtenir des données en texte plein.

**3.** Appareil (200) selon l'une des revendications 1 ou 2, dans lequel le moyen (245) destiné à décrypter est adapté pour utiliser une clé de décryptage basée sur une ID de support, un mot de passe ou une clé de révocation.

**4.** Appareil (200) selon l'une des revendications 1 à 3, dans lequel le moyen (230) destiné à crypter est par ailleurs adapté pour crypter une information sur un mot de passe crypté dans les données cryptées.

**5.** Appareil (200) selon l'une des revendications 1 à 4, comprenant par ailleurs un moyen (250) destiné à détecter une indication de protection anti-copie à partir des données cryptées ou des données en texte plein.

**6.** Appareil (200) selon la revendication 5, dans lequel le moyen (210) destiné à envoyer la demande d'écriture est adapté pour ne pas envoyer de demande d'écriture lorsqu'une indication de protection anti-copie est détectée.

**7.** Appareil (200) selon la revendication 5 ou 6, dans lequel le moyen (220) destiné à recevoir une ID de support est adapté pour ne pas recevoir l'ID de support lorsque l'indication de protection anti-copie est détectée.

**8.** Dispositif (200) selon l'une des revendications 5 à 7, dans lequel le moyen (230) destiné à crypter est adapté pour ne pas crypter les données lorsque l'indication de protection anti-copie est détectée.

**9.** Appareil (200) selon l'une des revendications 5 à 8, dans lequel l'indication de protection anti-copie correspond à un bit de contrôle dans les données cryptées ou en texte plein, les données cryptées ou en texte plein présentant des informations de contrôle de texte plein.

**10.** Appareil (200) selon l'une des revendications 1 à 9, comprenant par ailleurs un moyen destiné à authentifier par le moyen d'écriture de données et dans lequel les moyens (210; 235) destinés à envoyer sont adaptés pour envoyer une demande de lecture ou d'écriture cryptée et les moyens (220; 240) destinés à recevoir sont adaptés pour recevoir une ID de support cryptée.

**11.** Dispositif (200) selon la revendication 1, dans lequel la clé de révocation (448) est dérivée d'un bloc de révocation, le bloc de révocation spécifiant un arbre binaire à parcourir pour obtenir une clé de noeud de bloc de révocation.

**12.** Procédé pour fournir des données cryptées à un moyen d'écriture de données, comprenant le fait de:

envoyer une demande d'écriture au moyen d'écriture de données;
recevoir une ID de support (446) du moyen d'écriture de données à l'envoi de la demande d'écriture;
crypter (450) les données en texte plein à l'aide d'une clé de cryptage pour obtenir les données cryptées, la clé de cryptage étant basée (444) sur l'ID de support (446), un mot de passe (440) et une clé de révocation (448) révoquant un secret partagé connu uniquement des applications autorisées au cas où une application est compromise; et
envoyer les données cryptées au moyen d'écriture de données.

**13.** Programme d'ordinateur présentant un code de programme pour réaliser le procédé selon la revendication 12 lorsque le programme d'ordinateur est exécuté sur un ordinateur.

**14.** Système, comprenant
un appareil (100) pour écrire des données sur un support, comprenant

un moyen (110) destiné à recevoir une demande d'écriture et des données cryptées d'un fournisseur de données;
un moyen (120) destiné à créer une ID de support à la réception de la demande d'écriture;
un moyen (130) destiné à fournir l'ID de support à un appareil (200) pour fournir les données cryptées; et
un moyen (140) destiné à mémoriser les données cryptées sur le support et pour mémoriser l'ID de support sur le support à la création de l'ID de support, où les données cryptées sont cryptées sur base de l'ID de support;

et l'appareil (200) destiné à fournir les données cryptées à l'appareil (100) destiné à écrire des données, comprenant

un moyen (210) destiné à envoyer la demande d'écriture à l'appareil (100) pour écrire les données;

un moyen (220) destiné à recevoir l'ID de support de l'appareil (100) destiné à écrire les données à l'envoi de la demande d'écriture; et

un moyen (230) destiné à crypter les données en texte plein à l'aide d'une clé de cryptage pour obtenir les données cryptées, la clé de cryptage étant basée (444) sur l'ID de support (446), un mot de passe (440) et une clé de révocation (448) révoquant un secret partagé connu uniquement des applications autorisées au cas où une application est compromise; et

dans lequel le moyen (210) destiné à envoyer est adapté pour envoyer les données cryptées à l'appareil (100) pour écrire les données.

15. Lecteur optique comprenant un système selon la revendication 14.

16. Lecteur optique comprenant un progiciel selon la revendication 13.

## FIG 1a

# FIG 1b

# FIG 2

write request → means for receiving —110

encrypted data ⤏ means for receiving

means for creating —120

RNG —165

ID

means for providing —130

ID ←

means for storing —140

ID →

→ medium

encrypted data ⤏

100

read request → means for receiving —170

means for reading —175

encrypted data, ID ←

means for providing —180

encrypted data, ID ←

# FIG 3a

means for sending ~210

write request

~230

encrypted data

means for encrypting

plain text data

ID

means for receiving ~220

ID

200

# FIG 3b

FIG 4

EP 1 855 281 B1

Authoring — 410

Reading — 430

Sector Content — 458

AESEncrypt — 450

AESCBCEncrypt — 456

LSN — 452

PVC — 454

Public Key — 466

Private Key — 472

AESEncrypt — 462

AESHash — 465

RSASign — 474

Authorization Grant key — 448

User Supplied Password — 440

AESHash — 442

XOR — 444

Encrypted Logical Sector — 420, 460

EPVC — 464

RSA Public Key Hash — 470

Digital RSA Signature — 476

Disk Unique ID — 446

AESCBCDecrypt — 492

AESEncrypt — 488

Sector Content — 494

LSN — 490

AESDecrypt — 496

Compare — 498

PVC — 500

Compare — 506

AESHash — 504, 502

Public Key — 482

RSAVerify — 508

XOR — 484

AESHash — 480

Authorization Grant key — 486

User Supplied Password

# FIG 5

| Bit<br>Byte | 7 | 6 | 5 | 4 | 3 | 2 | 1 | 0 |
|---|---|---|---|---|---|---|---|---|
| 0 | Optional Node Key (ONK) Bits 0-4 | | | | | Key | Right | Left |
| 1<br>:<br>15 | Optional Node Key (ONK) Bits 5 though 124 | | | | | | | |
| 16 | ///////////////////////////////////// | | | | | ONK Bits 125-127 | | |

# FIG 6

| Bit<br>Byte | 7 | 6 | 5 | 4 | 3 | 2 | 1 | 0 |
|---|---|---|---|---|---|---|---|---|
| 0<br>:<br>15 | Disc Unique ID | | | | | | | |

# FIG 7

| Bit Byte | 7 | 6 | 5 | 4 | 3 | 2 | 1 | 0 |
|---|---|---|---|---|---|---|---|---|
| 0<br>:<br>3 | | | | Structure Size | | | | |
| 4<br>:<br>7 | | | | Structure Identifier `BTAS` | | | | |
| 8<br>:<br>15 | | | | DSI LSN | | | | |
| 16<br>:<br>23 | | | | FFIT LSN | | | | |
| 24<br>:<br>31 | | | | ARB LSN | | | | |
| 32<br>:<br>39 | | | | Backup DSI LSN | | | | |
| 40<br>:<br>47 | | | | Backup FFIT LSN | | | | |
| 48<br>:<br>55 | | | | Backup ARB LSN | | | | |

# FIG 8

| Bit Byte | 7 | 6 | 5 | 4 | 3 | 2 | 1 | 0 |
|---|---|---|---|---|---|---|---|---|
| 0 : 3 | FFITH Size (FFITHS) | | | | | | | |
| 4 : 7 | FFIT Identifier `BFIT' | | | | | | | |
| 8 : 15 | SecurDisc FFIT Version Number (High, Low) | | | | | | | |
| 16 : 23 | SecurDisc Copy Protection Recovery field | | | | | | | |
| 24 : 31 | SecurDisc Pass phrase Verification Checksum (EPVC) | | | | | | | |
| 32 : 39 | SecurDisc Global Feature Flag Mask | | | | | | | |
| 40 : 47 | FFITE Chunk Size (FFITECS) | | | | | | | |
| 48 : 55 | Number of FFITE Chunks (NUMFFITE) | | | | | | | |

# FIG 9

| Bit / Byte | 7 | 6 | 5 | 4 | 3 | 2 | 1 | 0 |
|---|---|---|---|---|---|---|---|---|
| 0 ⋮ 7 | LSN of File Fragment | | | | | | | |
| 8 ⋮ 15 | Size of File Fragment in logical sectors | | | | | | | |
| 8 | | | | | CS | PP | CP | |
| 9 | Reserved (SecurDisc Feature Flag Mask) | | | | | | | |
| 10 ⋮ 25 | File Fragment Checksum | | | | | | | |

# FIG 10a

| CP Value | Description |
|---|---|
| 00b | Copy Protection is not used for this file fragment. |
| 01b | Standard Copy Protection is used for this file fragment. |
| 10b | Copy Protection is used for this file fragment. Special protected output rules apply as specified in the compliance rules for viewer applications. |
| 11b | Reserved |

# FIG 10b

| Bit<br>Byte | 7 | 6 | 5 | 4 | 3 | 2 | 1 | 0 |
|---|---|---|---|---|---|---|---|---|
| 0<br>:<br>3 | ARB Length (N) | | | | | | | |
| 4<br>:<br>N+3 | Application Revocation Block | | | | | | | |

## FIG 11

| Bit / Byte | 7 | 6 | 5 | 4 | 3 | 2 | 1 | 0 |
|---|---|---|---|---|---|---|---|---|
| 0 | Feature Code | | | | | | | |
| 1 | | | | | | | | |
| 2 | Reserved | | Version | | | | Persistent | Current |
| 3 | Additional Length | | | | | | | |
| 4 | Reserved | | | | | | | CPA |
| : 7 | | | | | | | | |

FIG 12

```
┌─────────────────────┐              ┌─────────────────────┐
│                     │              │                     │
│  Host application   │◄─────────────►│  Optical Disk Drive │
│                     │ authentication│                     │
│                     │              │                     │
└─────────────────────┘              └─────────────────────┘
```

## FIG 13

| Byte \ Bit | 7 | 6 | 5 | 4 | 3 | 2 | 1 | 0 |
|---|---|---|---|---|---|---|---|---|
| 0 | Operation Code (A4h) | | | | | | | |
| 1 | Reserved | | | | | | | |
| 2 ⋮ 5 | Reserved | | | | | | | |
| 6 | Reserved | | | | | | | |
| 7 | Key Class (21h) | | | | | | | |
| 8 / 9 | Allocation Length | | | | | | | |
| 10 | AGID | | Key Format | | | | | |
| 11 | Control | | | | | | | |

## FIG 14

| Byte \ Bit | 7 | 6 | 5 | 4 | 3 | 2 | 1 | 0 |
|---|---|---|---|---|---|---|---|---|
| 0 / 1 | Data Length (0Ah) | | | | | | | |
| 2 / 3 | Reserved | | | | | | | |

| Byte | 7 | 6 | 5 | 4 | 3 | 2 | 1 | 0 |
|---|---|---|---|---|---|---|---|---|
| 0 / 1 | Reserved | | | | | | | |
| 2 | ODD Protocol Version Number | | | | | | | |
| 3 | AGID | | Reserved | | | | | |
| 4 ⋮ 7 | DEVID | | | | | | | |

...

## FIG 15

| Byte \ Bit | 7 | 6 | 5 | 4 | 3 | 2 | 1 | 0 |
|---|---|---|---|---|---|---|---|---|
| 0 | Data Length (36Ah) | | | | | | | |
| 1 | | | | | | | | |
| 2 | Reserved | | | | | | | |
| 3 | | | | | | | | |

| Byte | 7 | 6 | 5 | 4 | 3 | 2 | 1 | 0 |
|---|---|---|---|---|---|---|---|---|
| 0 | Encrypted ODD Random Number (R1) | | | | | | | |
| : | | | | | | | | |
| 15 | | | | | | | | |
| 16 | Encrypted Host Random Number (R2) | | | | | | | |
| : | | | | | | | | |
| 31 | | | | | | | | |
| 32 | Bit Position Index Value | | | | | | | |
| 33 | Reserved | | | | | | | |
| 34 | AARE Node Key | | | | | | | |
| : | | | | | | | | |
| 49 | | | | | | | | |
| 50 | Reserved | | | | | | | |
| 51 | | | | | | | | |

## FIG 16

| Byte \ Bit | 7 | 6 | 5 | 4 | 3 | 2 | 1 | 0 |
|---|---|---|---|---|---|---|---|---|
| 0 | Data Length (12h) | | | | | | | |
| 1 | | | | | | | | |
| 2 | Reserved | | | | | | | |
| 3 | | | | | | | | |

| Byte | 7 | 6 | 5 | 4 | 3 | 2 | 1 | 0 |
|---|---|---|---|---|---|---|---|---|
| 0 | Encrypted Disc Unique ID (DUID) | | | | | | | |
| : | | | | | | | | |
| 15 | | | | | | | | |

# FIG 17

| Bit<br>Byte | 7 | 6 | 5 | 4 | 3 | 2 | 1 | 0 |
|---|---|---|---|---|---|---|---|---|
| 0 | Operation Code (A3h) | | | | | | | |
| 1 | Reserved | | | | | | | |
| 2<br>:<br>5 | Reserved | | | | | | | |
| 6 | Reserved | | | | | | | |
| 7 | Key Class (21h) | | | | | | | |
| 8<br>9 | Parameter List Length | | | | | | | |
| 10 | AGID | | Key Format | | | | | |
| 11 | Control | | | | | | | |

# FIG 18

| Bit<br>Byte | 7 | 6 | 5 | 4 | 3 | 2 | 1 | 0 |
|---|---|---|---|---|---|---|---|---|
| 0 | Data Length (2Ah) | | | | | | | |
| 1 | | | | | | | | |
| 2 | Reserved | | | | | | | |
| 3 | | | | | | | | |

| | |
|---|---|
| 0<br>:<br>15 | Encrypted Host Random Number (R2) |
| 16 | Protocol Version |
| 17 | Bit Position Index Value (X) |
| 18<br>:<br>33 | Revocation Block Node Key (RENK) |
| 34<br>:<br>37 | Application Authentication Unique ID (AAUID) |
| 38<br>39 | Reserved |

# FIG 19

Read BTAS ⟶ 1910

[BTAS Structure not found]

Mount Media without SD ⟶ 1915

[BTAS Structure found]

Check copy protection feature ⟶ 1920

[SD Feature inactive or not present or CPA = false]

[Copy protection feature not used]

[Copy protection feature used]

Read SD drive feature descriptor ⟶ 1930

[Feature Active CPA = true]

[Authentication Failed]

Drive Host Authentication Type 1 ⟶ 1935

[Successful]

Mount Media using SD ⟶ 1940

FIG 20

EP 1 855 281 B1

Read SD drive feature — 2010

[SD Feature not present] → Continue without SD functionality — 2015

[Copy Protection Used, Abort recording]

Author Disk — 2020

Check Copy Protection — 2025

[Image Creation]

[Regular Writing]

Drive Host Authentication Type 2 — 2030

Promt for media — 2035

Write SD media — 2060

Report Error — 2065

[Authentication Failed]

[Project has Copy Protection Enabled]

Drive Host Authentication Type 1 — 2050

Drive Host Authentication Type 1 — 2055

[CPA= true]   [CPA= false]

Check CPA Flag — 2040

Check CPA Flag — 2045

[CPA flag off]

# FIG 21

| CP Flag | PP Flag | Key Ingredients | Desription |
|---------|---------|-----------------|------------|
| off | off | | File Fragment unencrypted |
| on | off | DUID, AGK | File Fragment encrypted using DUID and AGK |
| off | on | Pass phrase hash, AGK | File Fragment encrypted using pass phrase hash and AGK |
| on | on | DUID, Pass phrase hash,AGK | File Fragment encrypted using CAK built from AGK, pass phrase hash and DUID (see below) |

# FIG 22

Media Change Event — 2210

Standard Disc Recognition — 2215

GET CONFIGURATION — 2220

Check Disc Typ — 2225

Blank Disc with Copy Protection Capability — 2220

Partially Recorded Disc with DUID Overwrite Capability — 2240

Partially Recorded Media without DUID Overwrite Capability — 2245

Other media — 2270

Read DUID — 2250

DUID Present — 2255

DUID Not Present — 2260

CPA=true — 2235

CPA=false — 2265

FIG 23

EP 1 855 281 B1

Disc Change

Not Dirty, DUID unknown, CPA Unknown — 2310

GET CONFIGURATION

Drive Host Authentication Type 2

Not Dirty, DUID unknown, CPA True — 2315

Write to SD Disc

Not Dirty, DUID unknown, CPA False — 2320

Drive Host Authentication Type 1

Drive Host Authentication Type 2

Read SD Disc

2330 — Dirty, DUID known, CPA True

Read SD Disc

Write to SD Disc

2325 — Not Dirty, DUID known, CPA True

Read SD Disc

Write to SD Disc

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1164588 A2
- EP 0802527 A1
- AU 199960936 B2
- WO 9955055 A
- US 5940505 A
- EP 1587095 A2
- EP 0785547 A2
- EP 1622145 A2
- EP 1580746 A1